(19)

Europäisches
Patentamt
European
Patent Office
Office européen
des brevets

(11) **EP 2 355 517 A1**

(12) **EUROPEAN PATENT APPLICATION**
published in accordance with Art. 153(4) EPC

(43) Date of publication:
**10.08.2011 Bulletin 2011/32**

(51) Int Cl.:
***H04N 7/32*** (2006.01)

(21) Application number: **09823270.5**

(22) Date of filing: **22.10.2009**

(86) International application number:
**PCT/JP2009/005544**

(87) International publication number:
**WO 2010/050156 (06.05.2010 Gazette 2010/18)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.10.2008 EP 08018805**

(71) Applicant: **Panasonic Corporation**
**Kadoma-shi**
**Osaka 571-8501 (JP)**

(72) Inventors:
• **DRUGEON, Virginie**
**63225 Langen (DE)**

• **WEDI, Thomas**
**63225 Langen (DE)**
• **NARROSCHKE, Matthias**
**63225 Langen (DE)**

(74) Representative: **Grünecker, Kinkeldey,**
**Stockmair & Schwanhäusser**
**Anwaltssozietät**
**Leopoldstrasse 4**
**80802 München (DE)**

(54) **IMAGE ENCODING METHOD, IMAGE DECODING METHOD, IMAGE ENCODING DEVICE, IMAGE DECODING DEVICE, INTEGRATED CIRCUIT, AND PROGRAM**

(57)    Images are coded with higher efficiency while maintaining the same image quality. An image coding method of coding an image on a block basis, including: transforming (S1201) a two-dimensional array of pixel values of a current block to be encoded, into a two-dimensional array of transform coefficients; determining (S1202), depending on the two-dimensional array of the transform coefficients, a scan order for scanning the transform coefficients of the two-dimensional array; scanning (S1203) the transform coefficients of the two-dimensional array sequentially according to the scan order, to generate a one-dimensional array of the transform coefficients; and coding (S1204) the transform coefficients of the one-dimensional array.

FIG. 12A

```
        ↓
  Transformation ──── S1201
        ↓
  Scan determination ──── S1202
        ↓
  Scanning ──── S1203
        ↓
  Encoding ──── S1204
        ↓
```

EP 2 355 517 A1

**Description**

[Technical Field]

The present invention relates to the compression of video data, in particular, to compressing and decompressing video data with improved coding efficiency.

[Background Art]

At present, the majority of standardized video coding algorithms is based on hybrid video coding. Hybrid video coding methods typically combine several different lossless and lossy compression schemes in order to achieve the desired compression gain. Hybrid video coding is also the basis for ITU-T standards (H.26x standards such as H.261, H.263) as well as ISO/IEC standards (MPEG-X standards such as MPEG-1, MPEG-2, MPEG-4). The most recent and advanced video coding standard is currently the standard denoted as H.264/MPEG-4 advanced video coding (AVC) which is a result of standardization efforts by joint video team (JVT), a joint team of ITU-T and ISO/IEC MPEG groups.

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16x16 pixels) is the basic image element, for which the encoding is performed. However, various particular encoding steps may be performed for smaller image elements, denoted blocks or subblocks and having the size of, for instance, 8x8, 4x4, 16x8, etc.

Typically, the encoding steps of a hybrid video coding include a spatial and/or a temporal prediction. Accordingly, each block to be encoded is first predicted using either the blocks in its spatial neighborhood or blocks from its temporal neighborhood, i.e. from previously encoded video frames. A block of differences between the block to be encoded and its prediction, also called prediction residuals, is then calculated. Another encoding step is a transformation of a block of residuals from the spatial (pixel) domain into a frequency domain. The transformation aims at reducing the correlation of the input block. Result of the transformation is a block of values called transformation coefficients or shortly transform coefficients, the block having the same size as the block of residuals having been input to the transformation. Further encoding step is quantization of the transformation coefficients. In this step the actual lossy (irreversible) compression takes place.

After quantization, the coefficients are scanned in a predefined order, thus forming a one-dimensional sequence. Usually, the compressed transform coefficient values are further compacted (losslessly compressed) by means of an entropy coding. In addition, side information necessary for reconstruction of the encoded video signal is encoded and provided together with the encoded prediction error signal. This is for example information about the spatial and/or temporal prediction, amount of quantization, etc.

Since scanning generates a one-dimensional array of transform coefficients from a two-dimensional array of transform coefficients, it may also be said that scanning represents generation of a one-dimensional array of transform coefficients from a two-dimensional array of transform coefficients. In addition, the scan order indicates the order for the generation of a one-dimensional array of transform coefficients from a two-dimensional array of transform coefficients, and specifically the order of scanning the transform coefficients of the two-dimensional array. That is, the scan order indicates the order of the transform coefficients of the two-dimensional array.

Furthermore, the inverse scanning indicates an inverse process of the scanning. Specifically, it may also be said that the inverse scanning represents generation of a two-dimensional array of transform coefficients from a one-dimensional array of transform coefficients. In addition, the inverse scan order indicates the order of scanning for generation of a two-dimensional array of transform coefficients from a one-dimensional array of transform coefficients, and specifically the order of the transform coefficients of the two-dimensional array as in the case of the scan order.

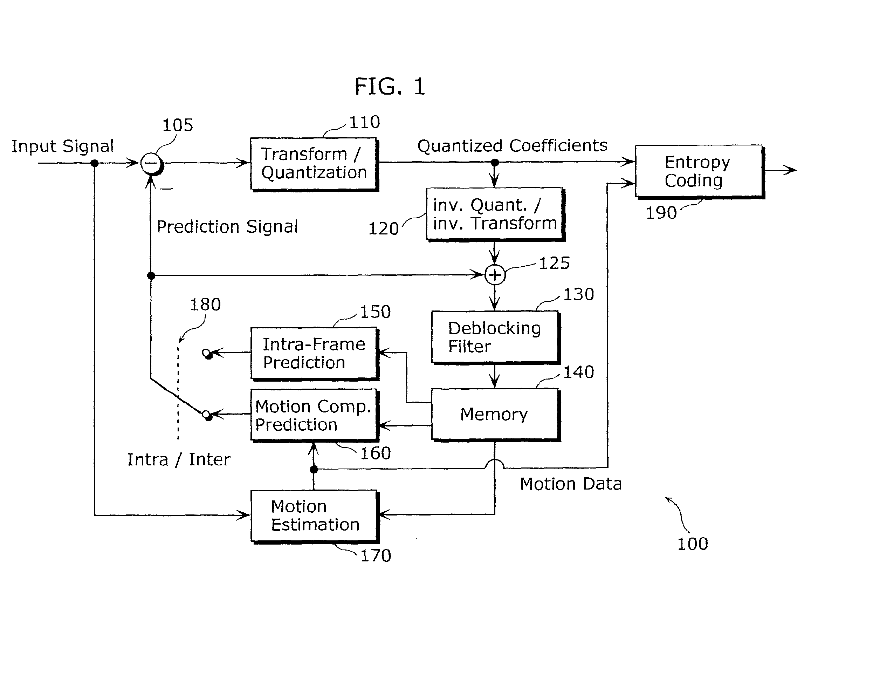

FIG. 1 is an example of a typical H.264/MPEG-4 AVC standard compliant image coding apparatus 100. The H.264/ MPEG-4 AVC standard (which is included herein by reference) combines all above mentioned encoding steps. A subtractor 105 first determines differences between a current block (block to be encoded) of a video image (input signal) and a corresponding predicted block (prediction signal). A temporally predicted block is computed using the previously encoded images which are stored in a memory 140. A spatially predicted block is interpolated from the values of boundary pixels in the neighboring blocks which have been previously encoded and stored in the memory 140. The memory 140 thus operates a delay unit that allows a comparison between current signal values and the prediction signal generated from previous signal values. The memory 140 can store a plurality of previously encoded video frames. The difference between the input signal and the prediction signal, denoted prediction error or residual, is then transformed and quantized by a transform/quantization unit 110. After scanning the quantized coefficients, an entropy coding unit 190 is applied in order to further reduce the amount of data in a lossless way.

Within the image coding apparatus 100, a decoding unit is incorporated for obtaining a decoded video signal.

In compliance with the encoding steps, the decoding steps include an inverse quantization/inverse transform unit 120. The decoded prediction error signal differs from the original prediction error signal due to the quantization error, called also quantization noise. A reconstructed signal is then obtained by adding the decoded prediction error signal to the prediction signal in an adder 125. In order to maintain the compatibility between the encoder side and the decoder side, the prediction signal is obtained based on the encoded and subsequently decoded video signal, which is known at both sides. Due to the quantization, quantization noise is superposed to the reconstructed video signal. Due to the block-wise coding, the superposed noise often has blocking characteristics, which result, in particular for strong quantization, in visible block boundaries in the decoded image. Such blocking artifacts have a negative effect upon human visual perception. In order to reduce these artifacts, a deblocking filter 130 is applied to every reconstructed image block. The deblocking filter is applied to the reconstructed signal, which is the sum of the prediction signal and the decoded prediction error signal. The video signal after deblocking is the decoded signal which is generally displayed at the decoder side (if no post filtering is applied). The deblocking filter in H.264/MPEG-4 AVC has the capability of local adaptation. In the case of a high degree of blocking noise, a strong (narrow-band) low pass filter is applied, whereas for a low degree of blocking noise, a weaker (broad-band) low pass filter is applied. Deblocking filter generally smoothes the block edges leading to an improved subjective quality of the decoded images. Moreover, since the filtered part of an image is used for the motion compensated prediction of further images, the filtering also reduces the prediction errors, and thus enables improvement of coding efficiency. The decoded signal is then stored in the memory 140.

The prediction signal in H.264/MPEG-4 AVC is obtained either by a temporal or by a spatial prediction. The type of prediction can be varied on a per macroblock basis. Macroblocks predicted using temporal prediction are called inter-encoded and macroblocks predicted using spatial prediction are called intra-encoded. Here, the term "inter" relates to inter-picture prediction, i.e. prediction using information from previous or following frames. The term "intra" refers to the spatial prediction, which only uses the already encoded information within the current video frame. The type of prediction for a video frame can be set by the user or selected by the video encoder so as to achieve a possibly high compression gain. In accordance with the selected type of prediction, an intra/inter switch 180 provides corresponding prediction signal to the subtractor 105.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images.

Intra-frame prediction uses a predefined set of intra-prediction modes which basically predict the current block using the boundary pixels of the neighboring blocks already encoded. The different types of spatial prediction refer to a different edge direction, i.e. the direction of the applied two-dimensional interpolation. In the image coding apparatus 100, an intra-frame prediction unit 150 performs the intra-frame prediction. The prediction signal obtained by such interpolation is then subtracted from the input signal by the subtractor 105 as described above. In addition, spatial prediction type information is entropy encoded and signalized together with the encoded prediction error signal.

In order to be decoded, inter-encoded images require also the previously encoded and subsequently decoded image(s). Temporal prediction may be performed uni-directionally, i.e., using only video frames ordered in time before the current frame to be encoded, or bi-directionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even I- type macroblocks. An inter-encoded macroblock (P- or B- macroblock) is predicted by employing motion compensated prediction in a motion compensated prediction unit 160. First, a best-matching block is found for the current block within a previously encoded and decoded video frame by a motion estimation unit 170. The best-matching block then becomes a prediction signal and the relative displacement (motion) between the current block and its best match is then signalized as motion data in the form of two-dimensional motion vectors within the side information provided together with the encoded prediction error signal. In order to optimize prediction accuracy, motion vectors may be determined with a sub-pixel resolution e.g. half pixel or quarter pixel resolution. A motion vector with sub-pixel resolution may point to a position within an already decoded frame where no real pixel value is available, i.e. a sub-pixel position.

For both the intra- and the inter-encoding modes, the differences between the current input signal and the prediction signal are transformed and quantized by transform quantization unit 110, resulting in the quantized transform coefficients. Generally, an orthogonal transformation such as a two-dimensional discrete cosine transformation (DCT) or an integer version thereof is employed since it reduces the correlation of the natural video images efficiently. After the transformation, lower frequency components are usually more important for image quality than high frequency components so that more bits can be spent for coding the low frequency components than the high frequency components. The coefficients are generally quantized. The possible representation values of the quantizer are coded and transmitted to the receiver. For this purpose, in H.264/MPEG-4 AVC, a so-called quantization parameter (QP) is coded and transmitted, which represents the distance between uniformly distributed representation values. Together with the knowledge of the representation values of the quantizer, a quantized coefficient is often being coded by a so called level, whereas each level corresponds uniquely to a representation value. After quantization, the two-dimensional matrix of quantized coefficients is converted into a one-dimensional array to pass the entropy coding unit 190. Typically, this conversion is performed by a so-called zig-zag scanning, which starts in the upper left corner of the two-dimensional array and scans the two-dimensional array in a predetermined sequence ending in the lower right corner. As the energy is typically concentrated in the left upper part of the image, corresponding to the lower frequencies, the zig-zag scanning results in an array where usually the last values are zero. This allows for efficient encoding using, for instance, run-length codes as a part of/before the actual entropy coding. In general, the term run-length code refers to any code which encodes runs of symbols instead of single symbols. Hereby, a run represents the number of symbols of the same value. In the context of entropy coding of the quantized coefficients, quantized coefficients or levels of the value zero are often represented by runs. A run is often also coded together with the value or the level of the subsequent quantized coefficient of a value unequal to zero.

For instance, a sequence of levels of quantized coefficients can be represented as follows:

3 2 0 0 0 0 1 0 2 0 0 0 1 1 0 0 0 0 4 0 ... 0

The above sequence can be represented by pairs of (run,level) as follows:

(0, 3)(0, 2)(4, 1)(1, 2)(3, 1)(0, 1)(4, 4)(EOB)

Here, the End Of Block (EOB) symbol indicates that all of the remaining quantized coefficients of the current image block being encoded are zero. Since the number of coefficients per block is (assumed to be) known, such run-length encoded sequence is uniquely decodable. The pair (run, level) may also be further encoded as a one codeword or as two separated codewords, e.g. by code words of a Huffman code or an arithmetic code.

Thus, other variations of the run-length coding may be used in image and video coding. For instance, the (run, level) pair or the (level, run) pair may define the run of coefficients with magnitude "level". In such encoding, the example sequence above would be encoded in the following sequence of pairs:

(3,1)(2,1)(0,4)(1,1)(0,1)(2,1)(0,3)(1,2)(0,4)(4,1)(0,EOB)

Such encoding could be of benefit if longer runs of differently valued coefficients were expected. In general, the sign of the coefficients may be encoded separately, or the level may be a signed value.

The run-length encoding as described above has been used as a part of entropy coding in several image and video coding standards so far. However, H.264/MPEG-4 AVC standard employs a more sophisticated coding, comprising various variable length encoding types for different syntax elements. In particular, H.264/MPEG-4 AVC specifies two alternative methods of entropy coding: a low-complexity technique based on context-adaptively switched sets of variable length codes, known as CAVLC, and the computationally more demanding algorithm of context-based adaptive binary coding (CABAC), the efficiency of which is higher tan the efficiency of CAVLC especially for longer blocks to be encoded. Both methods are context adaptive, meaning that they assume a non-stationary statistics of the input data and adapt the encoding accordingly.

CAVLC is supported by all profiles of the H.264/MPEG-4 AVC. It comprises a set of Exp-Golomb integer variable length codes applied to syntax elements other than transform coefficients. The scanned and quantized transform coefficients of a block typically contain only a few significant, i.e., non-zero coefficients, where, in addition, a predominant occurrence of coefficient levels with magnitude equal to one, so-called trailing ones, is observed at the end of the scan. Therefore, as a preamble, first the number of nonzero coefficients and the number of trailing ones are transmitted using a combined codeword, where one out of four variable length coding (VLC) tables are used based on the number of significant levels of neighboring blocks. Then, in the second step, sign and level value of significant coefficients are encoded by scanning the list of coefficients in reverse order. By doing so, the variable length coding for coding each individual level value is adapted on the base of the previously encoded level by choosing among six variable length coding tables. Finally, the zero quantized coefficients are signaled by transmitting the total number of zeros before the last nonzero level for each block, and additionally, for each significant level the corresponding run, i.e., the number of consecutive preceding zeros. By monitoring the maximum possible number of zeros at each coding stage, a suitable variable length code is chosen for the coding of each run value. A total number of 32 different VLCs are used in CAVLC entropy coding mode, where, however, the structure of some of these VLCs enables simple on-line calculation of any code word without recourse to the storage of code tables.

The CABAC design is based on the key elements: binarization, context modeling, and binary arithmetic coding. Binarization enables efficient binary arithmetic coding via a unique mapping of non-binary syntax elements to a sequence of bits, a so-called bin string. Each element of this bin string can either be processed in the regular coding mode or the bypass mode. The latter is chosen for selected bins such as for the sign information or lower significant bins, in order to speedup the whole encoding (and decoding) process by means of a simplified coding engine bypass. The regular coding mode provides the actual coding benefit, where a bin may be context modeled and subsequently arithmetic encoded. As a design decision, in general only the most probable bin of a syntax element is supplied with a context model using previously encoded bins. Moreover, all regular encoded bins are adapted by estimating their actual probability distribution. The probability estimation and the actual binary arithmetic coding is conducted using a multiplication-free method that enables efficient implementations in hardware and software.

In the above three examples of run-length coding, the term "level" had a different meaning. The word level is typically employed to designate the value of a quantized transform coefficient (quantizer level), signed or unsigned. Thus, in general, the term "level" may also refer to a zero-valued coefficient.

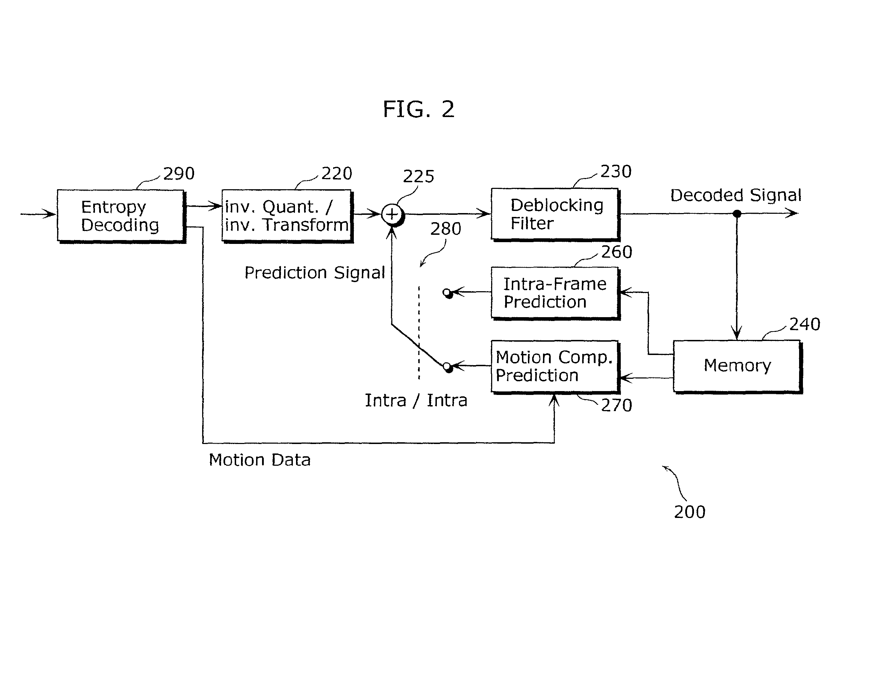

FIG. 2 illustrates an example image decoding apparatus 200 compliant with the H.264/MPEG-4 AVC video coding standard. The encoded video signal (input signal to the image decoding apparatus 200) first passes to an entropy decoding unit 290, which decodes the quantized coefficients, and the other information elements necessary for decoding such as motion data, type of prediction etc. The quantized coefficients are inversely scanned in order to obtain a two-dimensional matrix which is then fed to an inverse quantization/inverse transform unit 220. After inverse quantization and inverse transformation by the inverse quantization/inverse transform unit 220, a decoded (quantized) prediction error signal is obtained, which corresponds to the differences obtained by subtracting the prediction signal from the signal input to the image coding apparatus. The prediction signal is obtained from either a temporal or a spatial prediction unit 270 and unit 260, respectively, which are switched by an intra/inter switching unit 280 in accordance with a received information element signalizing the prediction applied at the image coding apparatus. The decoded information elements further include the information necessary for the prediction such as prediction mode in the case of intra-prediction and motion data in the case of motion compensated prediction.

The quantized prediction error signal in the spatial domain is then added by means of an adder 225 to the prediction signal obtained either from the motion compensated prediction unit 270 or intra-frame prediction unit 260. The reconstructed image may be passed through a deblocking filter 230 and the resulting decoded signal is stored in the memory 240 to be applied for temporal or spatial prediction of the following blocks.

The transformation employed in the majority of today's image and video encoding standards transforms the original image pixels, or image pixels of its prediction error signal into the domain of spatial frequency, abbreviated as frequency domain. The aim of the transformation is to de-correlate the input image in order to concentrate the information therein to enable more efficient encoding. A de-correlation transformation such as Karhunen-Loève transformation requires knowledge of the second order statistics of the input signal. However, the statistics of natural images varies not only from image to image, but may also differ for image areas within the same picture. Thus, estimating the statistics would increase the complexity of encoding and require signaling of the transformation parameters. Therefore, the majority of image and coding standards nowadays employ a fixed transformation, such as DCT or its integer version, whose performance is close to the performance of the ideal (de-correlation) transformation for most of the images.

The transformation of the prediction error signal typically concentrates the energy for a natural image in the left upper part of the transform block corresponding to lower frequencies, i.e. to the smoother parts of the image. In general, the high frequencies are less important to human perception than the lower frequencies. The higher frequencies correspond to rapidly changing details such as impulse noise. The transformation coefficients with higher values are typically concentrated within the left upper part of the transformed image and the rest contains zeros, or small groups with lower values. Therefore, instead of reading the transformation coefficient values row-by-row from the two-dimensional block before encoding them serially, a zig-zag scanning has been successfully deployed by the most of video coding standards, such as MPEG-X and H.26X.

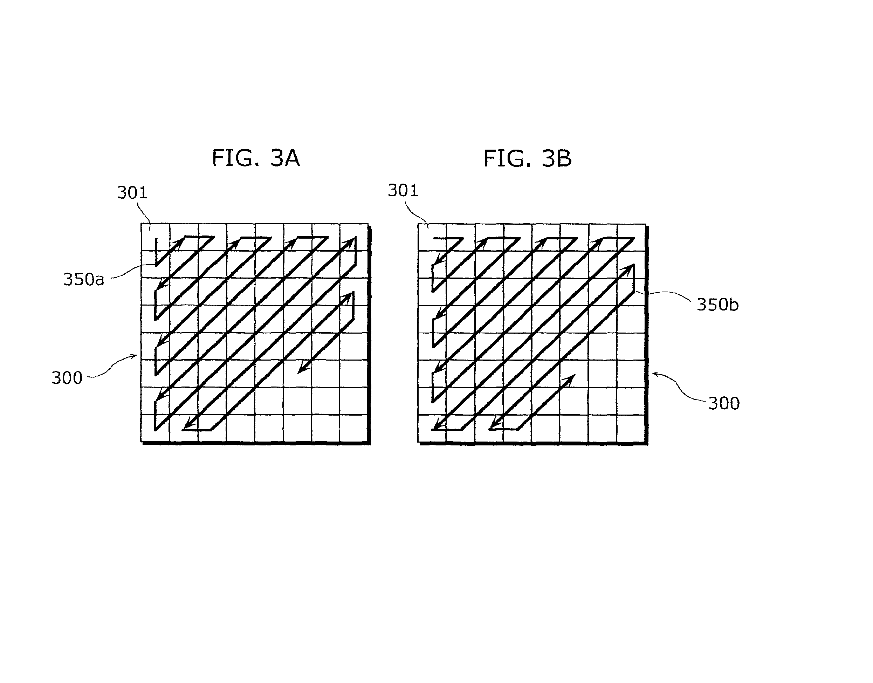

FIGS. 3A and 3B illustrate two examples of a zig-zag scan applied to a block 300 of 8x8 pixels. The upper left transformation coefficient 301 is sometimes called DC coefficient, corresponding to a direct current component after a frequency transformation. Starting by the transformation coefficient 301 called DC coefficient, the other transformation coefficients are scanned in the order indicated by a scan order line 350a or 350b. Thus, for the typical, rather smooth, natural image blocks, a sequence of coefficients is obtained, having the majority of non-zero coefficients at the beginning and ending with a sequence of zeros. Such sequence can be efficiently further compressed, for instance, by a run-length encoding as described above.

A method of adaptively changing the scan order is disclosed by PTL 1.

[Citation List]

[Patent Literature]

[PTL 1]
European Patent Application Publication (EP) 1 679 903

[Summary of Invention]

[Technical Problem]

However, the assumption of smoothness for the image blocks is in general not necessarily fulfilled. In particular, for image blocks containing sharp edges or textures, the distribution of transformation coefficient values within the transformed image block may substantially differ. In such blocks, groups of or single non-zero values may occur in the higher frequency areas. After zig-zag scanning of blocks with non-zero coefficient values distributed in the area of higher frequencies, the resulting sequence of coefficients will contain shorter zero runs, which will in turn lead to lower efficiency of the run-length encoding. Alternatively, other scan method could be applied to blocks containing higher frequencies. However, the signaling of the employed scan order, again, reduces the compression gain of the image or video encoding.

In the method disclosed by PTL 1, the scan order is changed based on statistical information. In other words, the scan order of the current block is determined according to the neighboring blocks. Using such a method, an incorrect scan order may be determined when the current block and the neighboring blocks have different characteristics. In such a case, it is not possible to obtain a high compression effect of coding.

Thus, the aim of the present invention is to provide a method for compressing and decompressing video data with an improved data compression rate for the same quality, as well as a corresponding image coding apparatus and image decoding apparatus.

[Solution to Problem]

The above aim is achieved by the features as set forth in the independent claims.

Preferred embodiments are the subject matter of dependent claims.

That is, in order solve the above problem, an image coding method according to an aspect of the present invention is an image coding method of coding an image on a block basis and includes: transforming a two-dimensional array of pixel values of a current block to be encoded, into a two-dimensional array of transform coefficients; determining, depending on the two-dimensional array of the transform coefficients, a scan order for scanning the transform coefficients of the two-dimensional array; scanning the transform coefficients of the two-dimensional array sequentially according to the scan order, to generate a one-dimensional array of the transform coefficients; and coding the transform coefficients of the one-dimensional array.

This allows for more efficient coding of images while maintaining the same image quality.

Furthermore, in the determining, the scan order may be determined depending on one or more transform coefficients to be scanned first according to a same scan order in any scan order determined in the determining.

This allows for adaptive determination of the remaining scan order based on the transform coefficients to be scanned first.

Furthermore, in the determining, the scan order may be determined (i) depending on a sum of absolute values of one or more transform coefficients among the one or more transform coefficients to be scanned first, or (ii) by comparing, when the one or more transform coefficients to be scanned first are two or more transform coefficients, a first transform coefficient and a second transform coefficient among the two or more transform coefficients.

This allows for adaptive determination of the scan order according to characteristics of the image.

Furthermore, in the determining, the scan order may be determined depending on the two-dimensional array of the transform coefficients and transform coefficients of previously coded blocks.

This allows for adaptive determination of the scan order in consideration of the tendency of the neighboring blocks.

Furthermore, in the determining, the scan order may be determined by selecting a scan order from among a plurality of predefined scan orders including a scan order of a frequency selective scan in which only a subset of the transform coefficients of the two-dimensional array is scanned.

This allows for adaptive determination of the scan order from among a plurality of predetermined scan orders.

Furthermore, in the determining, the scan order may be determined by comparing a measure determined based on the two-dimensional array of the transform coefficients with a predefined threshold.

This allows for adaptive determination of the scan order based on a predetermined threshold.

Furthermore, the image coding method may further include enabling the determining of the scan order in the determining, and transmitting, to an image decoding apparatus, a signal indicating that the determining of the scan order depending on the two-dimensional array of the transform coefficients has been enabled.

This allows for the same determination in coding and in decoding as to whether or not to adaptively determine the scan order or the inverse scan order.

Furthermore, an image decoding method according to an aspect of the present invention is an image decoding method of decoding an image on a block basis and includes: decoding coded transform coefficients of a one-dimensional array corresponding to a current block to be decoded; determining, depending on the decoded transform coefficients of the one-dimensional array, an inverse scan order for inversely scanning the transform coefficients of the one-dimensional array for a two-dimensional array of the transform coefficients; inversely scanning the transform coefficients of the one-dimensional array sequentially according to the inverse scan order, to generate the two-dimensional array of the transform coefficients; and inversely transforming the two-dimensional array of the transform coefficients into a two-dimensional array of pixels values.

This allows for more efficient decoding of images while maintaining the same image quality.

Furthermore, in the determining, the inverse scan order may be determined depending on one or more transform coefficients to be inversely scanned first according to a same inverse scan order in any inverse scan order determined in the determining.

This allows for adaptive determination of the remaining inverse scan order based on the transform coefficients to be inversely scanned first.

Furthermore, in the determining, the scan order may be determined (i) depending on a sum of absolute values of one or more transform coefficients among the one or more transform coefficients to be inversely scanned first, or (ii) by comparing, when the one or more transform coefficients to be inversely scanned first are two or more transform coefficients, a first transform coefficient and a second transform coefficient among the two or more transform coefficients.

This allows for adaptive determination of the inverse scan order according to characteristics of the image.

Furthermore, in the determining, the inverse scan order may be determined depending on the transform coefficients of the one-dimensional array and transform coefficients of previously decoded blocks.

This allows for adaptive determination of the inverse scan order in consideration of the tendency of the neighboring blocks.

Furthermore, in the determining, the inverse scan order may be determined by selecting an inverse scan order from among a plurality of predefined inverse scan orders including an inverse scan order of a frequency selective scan in which only a subset of the transform coefficients of the two-dimensional array is inversely scanned.

This allows for adaptive determination of the inverse scan order from among a plurality of predetermined inverse scan orders.

Furthermore, in the determining, the inverse scan order may be determined by comparing a measure determined based on the one-dimensional array of the transform coefficients with a predefined threshold.

This allows for adaptive determination of the inverse scan order based on a predetermined threshold.

Furthermore, the image decoding method may further include enabling the determining of the inverse scan order in the determining, the enabling being triggered by receipt of a signal which is transmitted by an image coding apparatus and indicates that determining of a scan order depending on the two-dimensional array of the transform coefficients has been enabled.

This allows for the same determination in coding and in decoding as to whether or not to adaptively determine the scan order or the inverse scan order.

Furthermore, an image coding apparatus according to an aspect of the present invention may be an image coding apparatus which codes an image on a block basis, and include: a transformation unit configured to transform a two-dimensional array of pixel values of a current block to be encoded, into a two-dimensional array of transform coefficients; a scan order determining unit configured to determine, depending on the two-dimensional array of the transform coefficients, a scan order for scanning the transform coefficients of the two-dimensional array; a scanning unit configured to scan the transform coefficients of the two-dimensional array sequentially according to the scan order, to generate a one-dimensional array of the transform coefficients; and an encoder which codes the transform coefficients of the one-dimensional array.

This allows for the usage as an image coding apparatus which codes images with higher efficiency while maintaining the same image quality.

Furthermore, an image decoding apparatus according to an aspect of the present invention may be an image decoding apparatus which decodes an image on a block basis, and include: a decoder which decodes coded transform coefficients of a one-dimensional array corresponding to a block to be decoded; a determining unit configured to determine, depending on the decoded transform coefficients of the one-dimensional array, an inverse scan order for inversely scanning the transform coefficients of the one-dimensional array for a two-dimensional array of the transform coefficients; a block forming unit configured to scan the transform coefficients of the one-dimensional array sequentially according to the inverse scan order, to generate the two-dimensional array of the transform coefficients; and a transformation unit configured to inversely transform the two-dimensional array of the transform coefficients into a two-dimensional array of pixel values.

This allows for the usage as an image decoding apparatus which decodes images with higher efficiency while maintaining the same image quality.

Furthermore, an integrated circuit according to an aspect of the present invention may be an integrated circuit which codes an image on a block basis, and include: a transformation unit configured to transform a two-dimensional array of pixel values of a current block to be encoded, into a two-dimensional array of transform coefficients; a scan order determining unit configured to determine, depending on the two-dimensional array of the transform coefficients, a scan order for scanning the transform coefficients of the two-dimensional array; a scanning unit configured to scan the transform coefficients of the two-dimensional array sequentially according to the scan order, to generate a one-dimensional array of the transform coefficients; and an encoder which codes the transform coefficients of the one-dimensional array.

This allows for the usage as an integrated circuit which codes images with higher efficiency while maintaining the same image quality.

Furthermore, an integrated circuit according to an aspect of the present invention may be an integrated circuit which decodes an image on a block basis, and include: a decoder which decodes coded transform coefficients of a one-dimensional array corresponding to a block to be decoded; a determining unit configured to determine, depending on the decoded transform coefficients of the one-dimensional array, an inverse scan order for inversely scanning the transform coefficients of the one-dimensional array for a two-dimensional array of the transform coefficients; a block forming unit configured to scan the transform coefficients of the one-dimensional array sequentially according to the inverse scan order, to generate the two-dimensional array of the transform coefficients; and a transformation unit configured to inversely transform the two-dimensional array of the transform coefficients into a two-dimensional array of pixel values.

This allows for the usage as an integrated circuit which decodes images with higher efficiency while maintaining the same image quality.

Furthermore, a program according to an aspect of the present invention may be a program which causes a computer to execute the image coding method.

This allows the image coding method to be implemented as a program.

Furthermore, a program according to an aspect of the present invention may be a program which causes a computer to execute the image decoding method.

This allows the image decoding method to be implemented as a program.

It is the particular approach of the present invention to determine scan order to be applied to a current block of transformation coefficients in image or video encoding and decoding based on the values of transform coefficients within the current block as described above.

Accordingly, it is possible to change the scan order in a locally adaptive manner, i.e. for particular blocks and adapted to the characteristics thereof. Moreover, no additional signalling is required to determine the scan order when the values of transform coefficients known at both encoder and decoder are used. Thus, the same block of coefficients may be encoded more efficiently, resulting in higher compression gain while maintaining the same image quality.

According to a first aspect of the present invention, a method for encoding an image divided into blocks of pixels is provided. Pixel values of a current image block are transformed into transformation coefficients, transformation coefficients of the current image block are sequentially scanned according to a scan order and the scanned transformation coefficients are encoded. The scan order for the current image block is determined based on transformation coefficient values of the current image block.

According to another aspect of the present invention, a method for decoding of the encoded image data divided into blocks of pixels is provided. Encoded scanned transformation coefficients related to a current image block are decoded, inverse-scanned sequentially according to an inverse scan order, and inverse transformed into pixel values of the current image block. The inverse scan order for the current image block is determined based on transformation coefficient values of the current image block.

According to still another aspect of the present invention, an encoder for encoding image data divided into blocks of pixels is provided. The encoder includes a transformation unit for transforming pixel values of a current image block into transform coefficients, a scanning unit for scanning transform coefficients sequentially according to a scan order, and an encoder for encoding the scanned transform coefficients. A determining unit is capable of determining the scan order for the current image block based on transform coefficient values of the current image block.

According to still another aspect of the present invention, a decoder for decoding encoded image data divided into blocks of pixels is provided. The decoder comprises a decoder for decoding encoded scanned transform coefficients of a current image block, a block forming unit for inverse scanning of the decoded transform coefficients of the current image block sequentially according to an inverse scan order; and a transformation unit for inverse transforming inversely scanned transform coefficients of the current image block into pixel values. A determining unit is capable of determining the inverse scan order for the current image block based on transform coefficient values of said current image block.

Preferably, the scan order is selected from a plurality of predefined scan orders. One of the predefined scan orders may be the zig-zag scan or any other fixedly defined scan. One of the predefined scan orders may also be a frequency selective scan in which only a subset of transformation coefficients is scanned while the remaining coefficients are set to zero. The frequency selective scan is not fixed, i.e., it may choose the transformation coefficients to be scanned in an arbitrary way such as additional signalling, or implicit determination, or using of other signalling elements such as, for instance, quantization matrix.

In accordance with an embodiment of the present invention, the scan order is determined adaptively based on the values of coefficients rather than being selected from a set of predefined scans or types of scans. Preferably, the assignment between the values of transform coefficients and the scan is performed dynamically, in the same way at the encoder and the decoder, for instance, based on the values of coefficients of the already encoded blocks. However, the assignment may also be fixed or signalized.

Preferably, the scan order is determined adaptively also within the current block. Accordingly, the position of a next coefficient to be scanned is determined based on the values of previously scanned coefficients. Such scan order has an advantage of adapting to the structure of the block of coefficients even if the image block contained edges. By adapting the scan, the scanned coefficients can be encoded efficiently by an entropy code.

Preferably, the scan order of the first $N$ coefficients is predefined and the position of each following coefficient to be scanned is determined adaptively, depending on values of coefficients previously scanned.

In particular, the order of scan of each coefficient value is determined based on a binary information such as the information if a coefficient in a given position has a zero value or a non-zero value. However, the scan may also be determined based on the values of the coefficients directly or based on any function thereof.

In particular, it is an advantage when the first $N$ transformation coefficients of the plurality of predefined scans are scanned in the same order. In such case, regardless the scan order being selected, the first $N$ coefficients are scanned in the same order and thus, may be used by both encoder and decoder for determining the actual scan order. The presence of the coefficients with higher values apart of the DC coefficients may be an indicator for presence of further higher frequency coefficients.

In accordance with an embodiment of the present invention, the scan order is determined by evaluating a measure calculated based on values of the first $N$ transform coefficients. This measure may be any function of the first $N$ transformation coefficients. Preferably, the measure is a sum of the absolute values of the first $N$ coefficients. However, any other metric may be employed instead or any norm such as sum of square differences, weighted sum, maximum or minimum coefficient value. Other functions may also be used, for instance, measures based on statistic features such as statistical moments, number of coefficients exceeding or being below certain value, or any other measures.

In accordance with another embodiment of the present invention, the scan order is determined based on the number of non-zero transformation coefficients within the current block. Determining the scan order in this way also does not require knowledge of the actual scan order and may thus be applied in the same way at both encoder and decoder. Obviously, in the same way a number of zero transformation coefficients may be used to determine the scan order.

In accordance with still another embodiment of the present invention, the scan order is determined based on levels. When the encoding includes an entropy encoding, in which levels denote (possibly unsigned and/or quantized) values of transform coefficients, they may also be used equally at the encoder and the decoder without knowing the actual scan order. The levels may denote both the zero and the non-zero coefficients, depending on the entropy code applied. Again, any measure determined based on the levels may be used to determine the scan order. Preferably, a sum or a weighted sum of the levels is used due to its low computational complexity. However, any other function such as metric, norm, statistics, etc. may equally be employed instead or in addition.

Preferably, the selection of the scan order for any embodiment of the present invention is based on comparison of the determined measure with a predefined threshold. Preferably, the threshold is provided for a certain number of blocks together with the encoded block coefficients. The number of blocks may correspond to a slice and the threshold may be signalized within a slice header. Alternatively, the threshold may be provided per image or per number of images. However, the threshold can also be fixed or there may be a default threshold that can be possibly replaced by an optional signalling. If the selection of scan order distinguishes more than two predefined scan orders, there may be more than one threshold applied. However, the determination of the scan order does not necessarily rely on a predefined threshold. Statistic methods such as hypothesis testing may be employed to decide on the scan order, or the threshold may be determined dynamically in the same way at the encoder and at the decoder, for instance, based on statistical features of the video sequence, based on encoder/decoder parameters, or similarly.

In accordance with an embodiment of the present invention the determining of the scan order may be enabled or disabled. Preferably, the enabling and/or disabling are triggered by an enabling flag which is provided together with the encoded transformation coefficients. In particular, the enabling flag is set in a slice header. However, the enabling flag may also be set in a different way, for instance, within image or video packets that do not contain the actual image information. The enabling flag may also be provided with finer granularity, for instance, for image areas smaller than slice such as macroblock or block. It may also be provided with a coarser granularity, i.e. for more slices. Hereby, the signalling of the enabling flag may be performed regularly (for instance, each m blocks, macroblocks, slices, frames, group of pictures, etc., wherein m is an integer equal to or greater than 1) or irregularly (for instance, in a packet separated from the video data packet containing the encoded coefficients). In H.264/MPEG-4 AVC based coding, special network abstraction layer units may be used to carry this information at an arbitrary position within the video sequence. Obviously, the enabling flag being set to one if scan switching is enabled and being set to zero if it is disabled, may be replaced by a disabling flag with values one and zero assigned reversely. Enabling and disabling the scan switching allows for automatic or user driven decision to use or not the scan order switching. The switching may be disabled, for instance, if the images to be encoded are known to have statistics where switching does not provide any benefit, or where the benefit provided by scan switching is negligible.

Preferably, scan condition information is included with the enabling flag if the enabling flag signalizes enabling of the scan order determining. In particular, the scan condition information corresponds to the number of coefficients taken into account when determining the scan and/or to the value of the threshold used to determine the scan.

Still preferably, the particular approach of the present invention is applied optionally or mandatory within one of the existing or future video coding standards based on hybrid coding such as H.264/MPEG-4 AVC or its follower(s).

In accordance with another aspect of the present invention, a computer program product comprising a computer-readable medium having a computer-readable program code embodied thereon is provided, the program code being adapted to carry out the present invention.

The above and other objects and features of the present invention will become more apparent from the following description and preferred embodiments given in conjunction with the accompanying drawings.

[Advantageous Effects of Invention]

The present invention allows for more efficient coding or decoding of images while maintaining the same image quality.

[Brief Description of Drawings]

[Fig. 1]
FIG. 1 schematically illustrates, in block diagram form, the configuration of a conventional hybrid video encoder.
[Fig. 2]
FIG. 2 schematically illustrates, in block diagram form, the configuration of a conventional hybrid video decoder.
[Fig. 3A]
FIG. 3A shows an example of a zig-zag scan for an 8x8 large block of quantized transform coefficients.
[Fig. 3B]
FIG. 3B shows another example of a zig-zag scan for an 8x8 large block of quantized transform coefficients.
[Fig. 4]

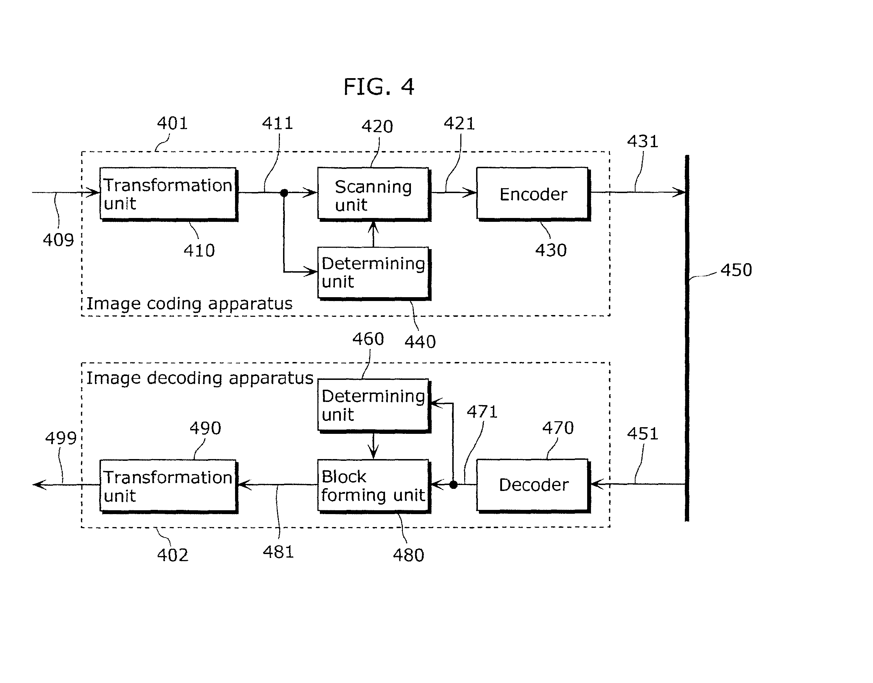

FIG. 4 shows a block diagram of a video encoder and decoder in accordance with the present invention.
[Fig. 5]

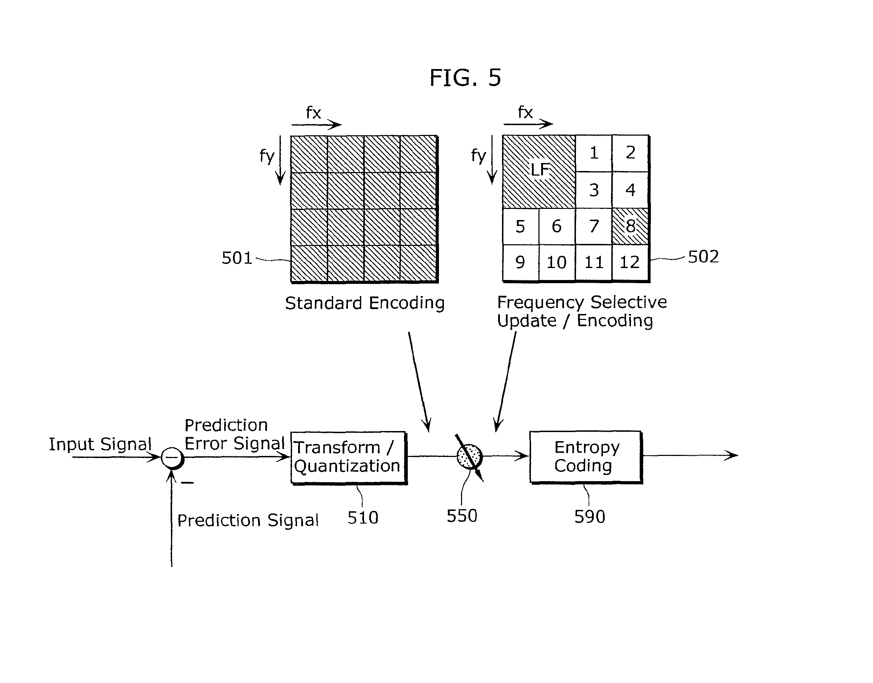

FIG. 5 schematically illustrates a hybrid video encoder part modified by using frequency selective encoding.
[Fig. 6]

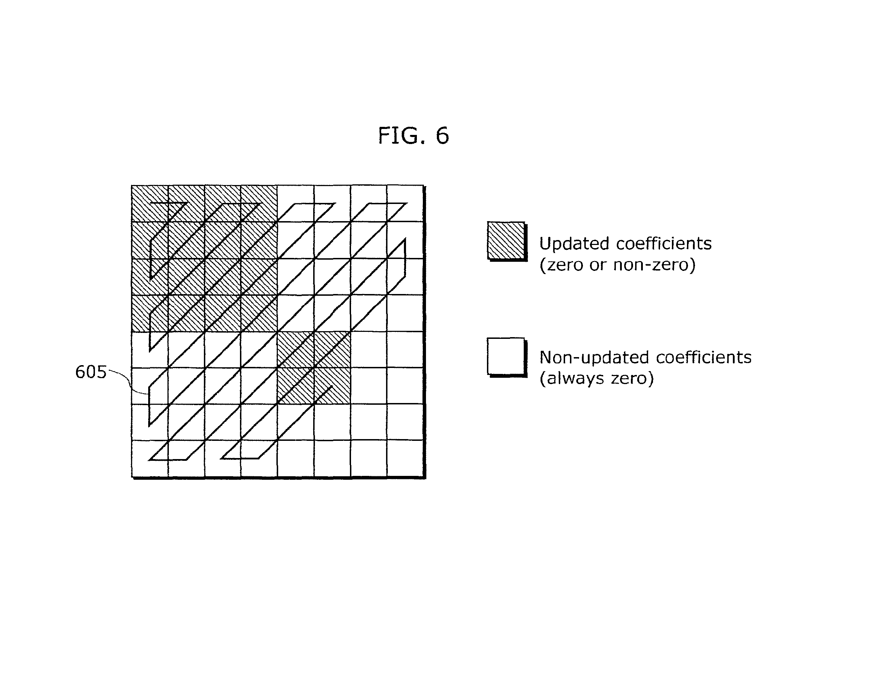

FIG. 6 shows an example for a zig-zag scan with non-zero coefficients distributed over a frequency selective encoded block for an 8x8 large block.
[Fig. 7]

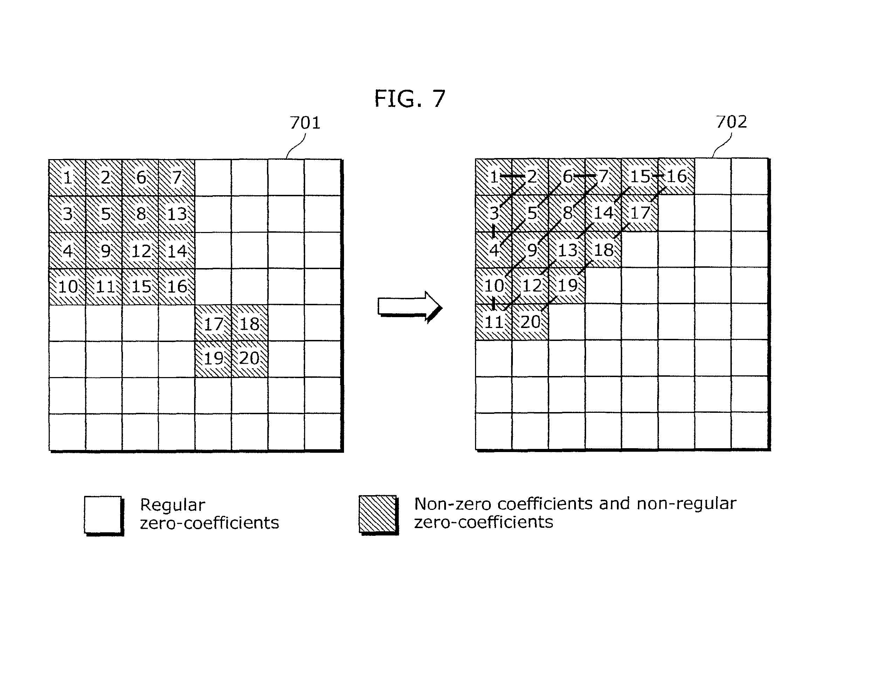

FIG. 7 illustrates the re-ordering and scanning of transform coefficients in accordance with frequency selective encoding and scan for 8x8 large blocks.
[Fig. 8]

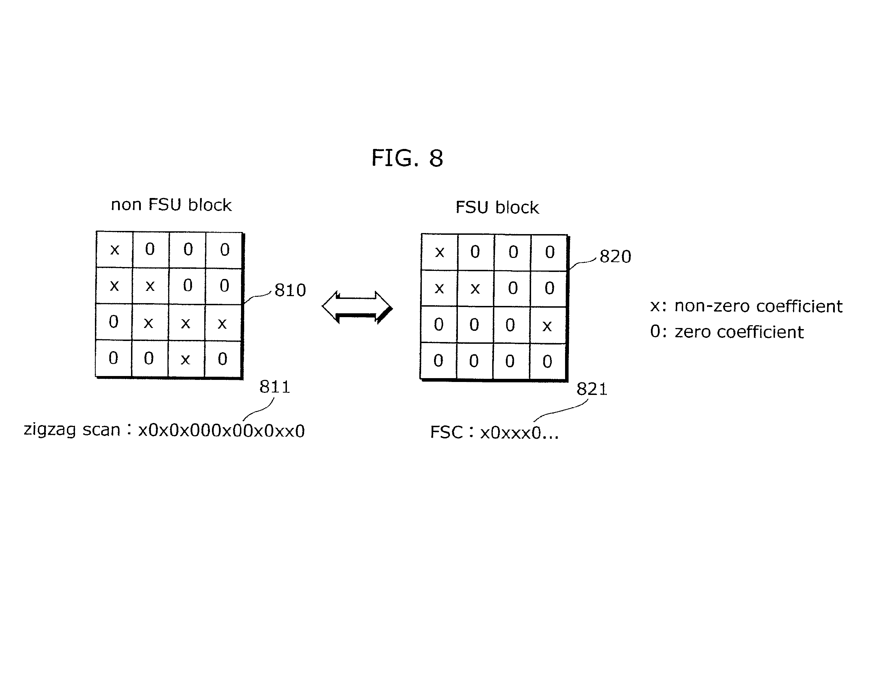

FIG. 8 schematically illustrates a frequency selective encoding and scan as well as ordinary zig-zag scan exemplified for 4x4 large blocks.
[Fig. 9]

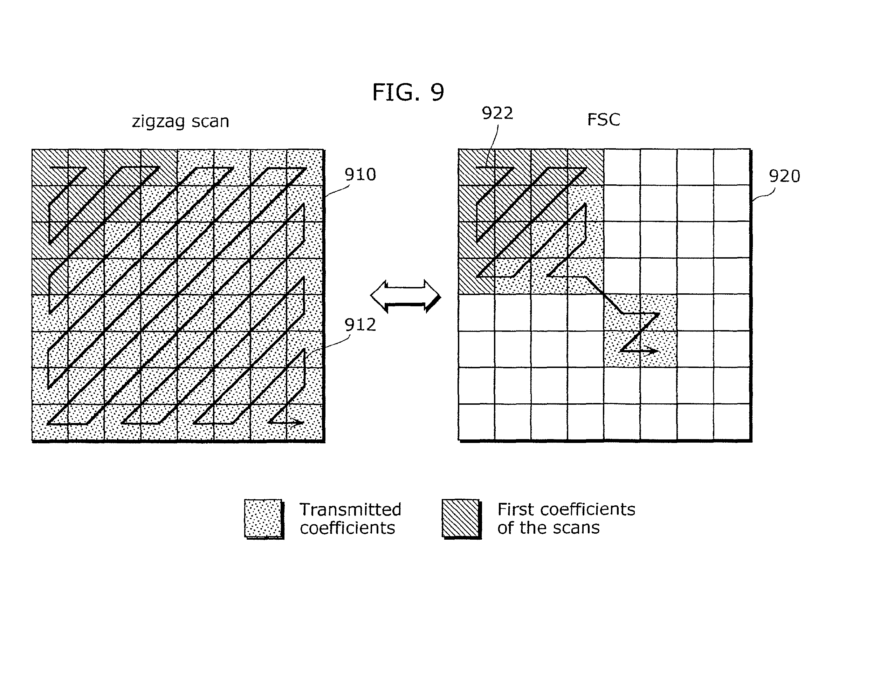

FIG. 9 illustrates frequency selective scanning and zig-zag scanning having the common scan order of first ten scanned coefficients for 8x8 large blocks.
[Fig. 10]

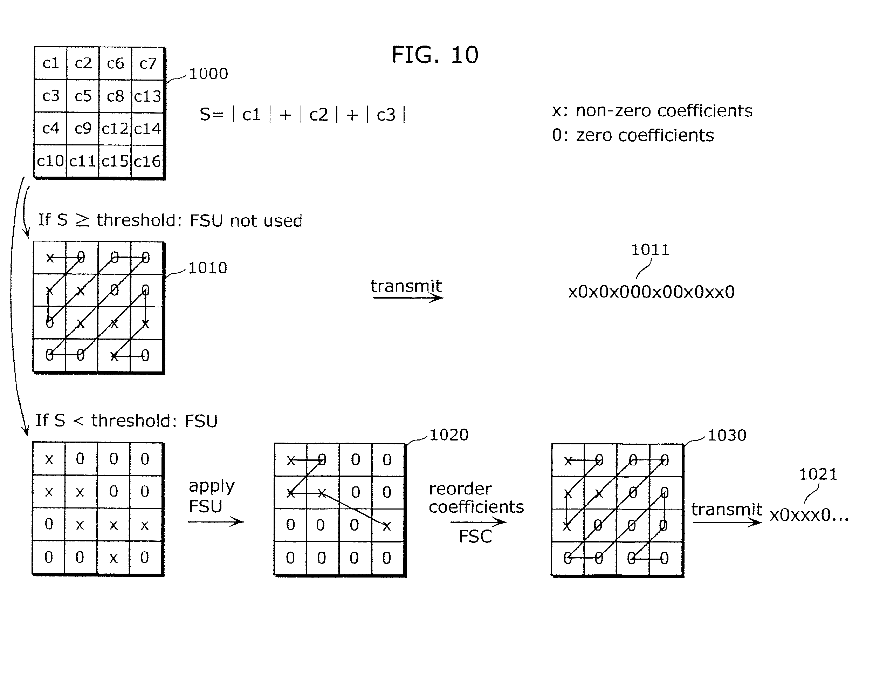

FIG. 10 schematically illustrates a frequency selective encoding and scan as well as ordinary zig-zag scan in accordance with the first embodiment of the present invention, exemplified for 4x4 large blocks.
[Fig. 11]

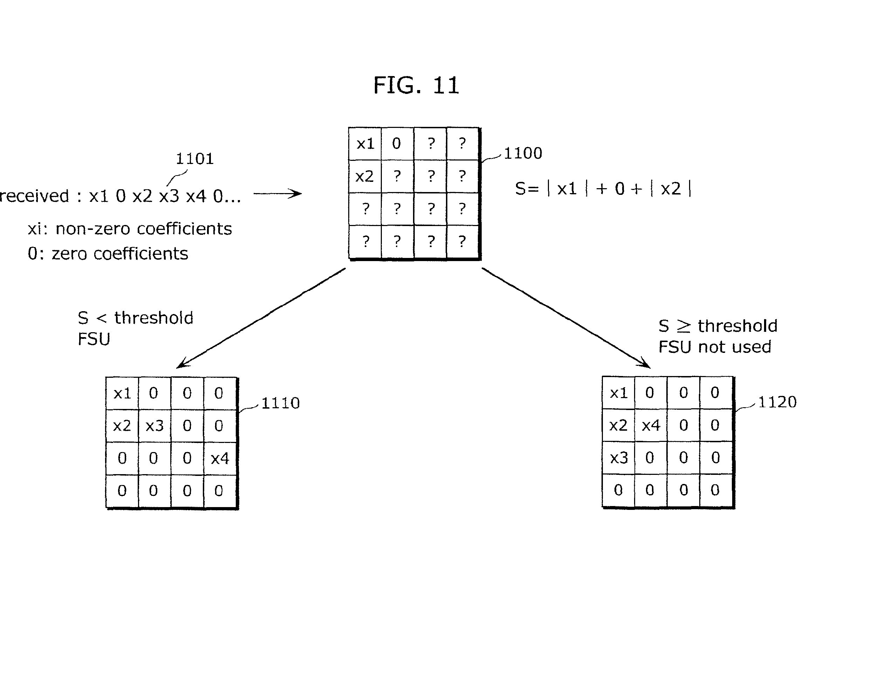

FIG. 11 schematically illustrates a frequency selective decoding and inverse scan as well as ordinary inverse zig-zag scan in accordance with the first embodiment of the present invention, exemplified for a 4x4 large block.
[Fig. 12A]

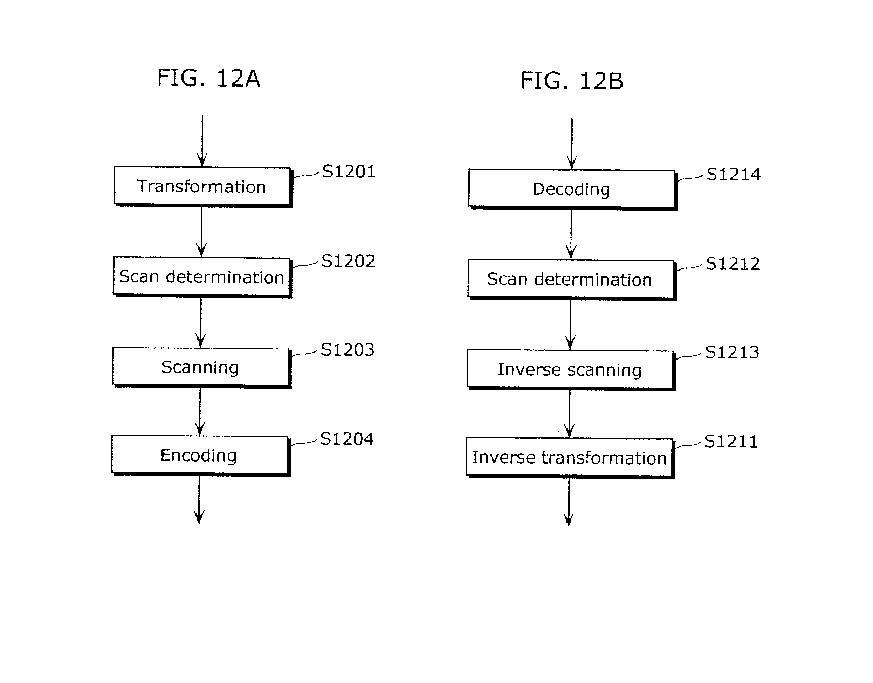

FIG. 12A illustrates steps of a method for encoding an image segmented into blocks in accordance with the present invention.

[Fig. 12B]

FIG. 12B illustrates steps of a method for decoding an encoded image segmented into blocks in accordance with the present invention.

[Fig. 13]

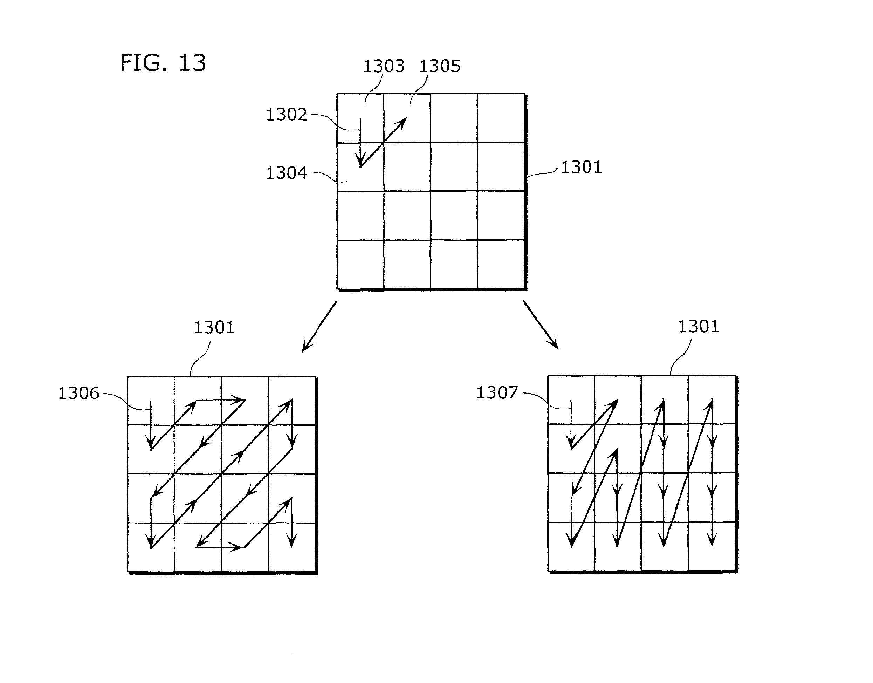

FIG. 13 illustrates a variation of the scan order to be determined.

[Fig. 14]

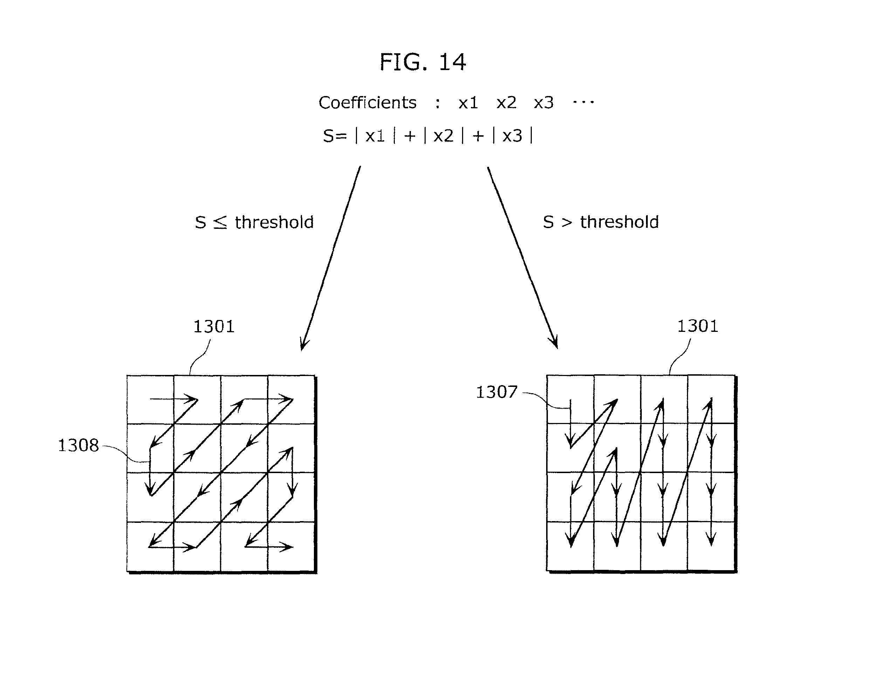

FIG. 14 illustrates another variation of the scan order to be determined.

[Fig. 15]

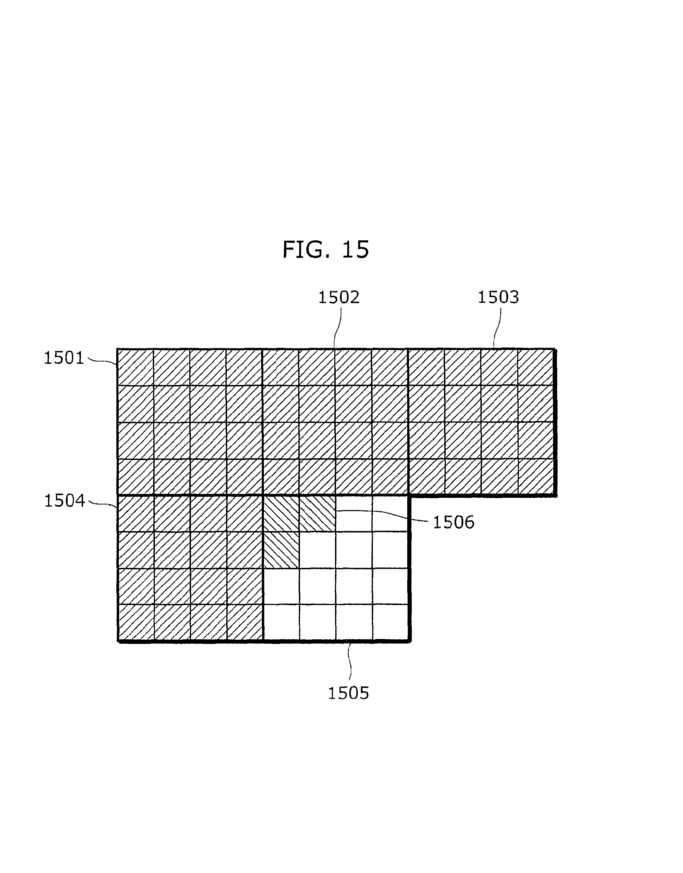

FIG. 15 is a conceptual diagram showing a current block and neighboring blocks.

[Fig. 16]

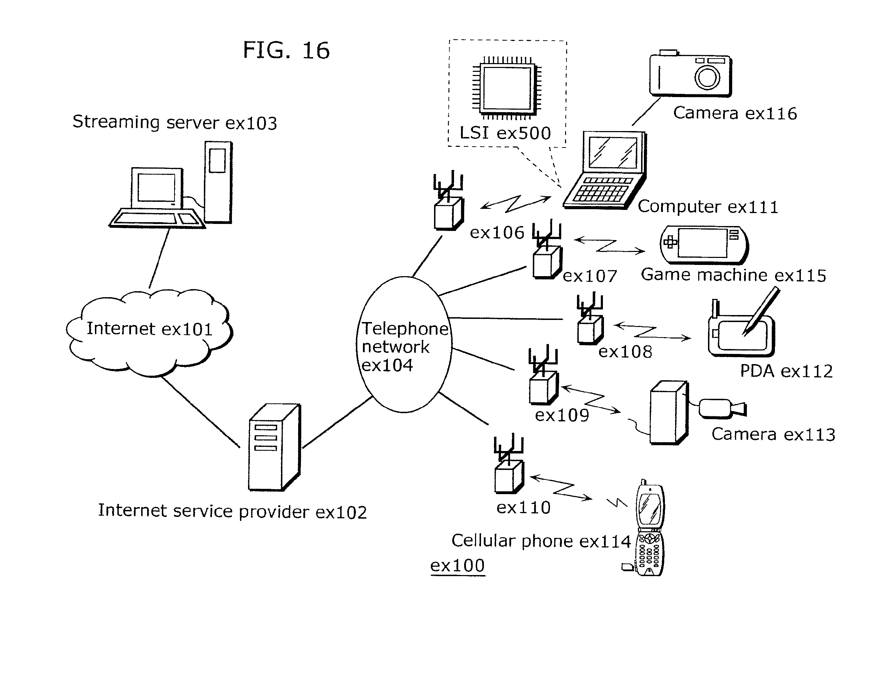

FIG. 16 schematically illustrates an overall configuration of a content providing system for implementing content distribution services.

[Fig. 17]

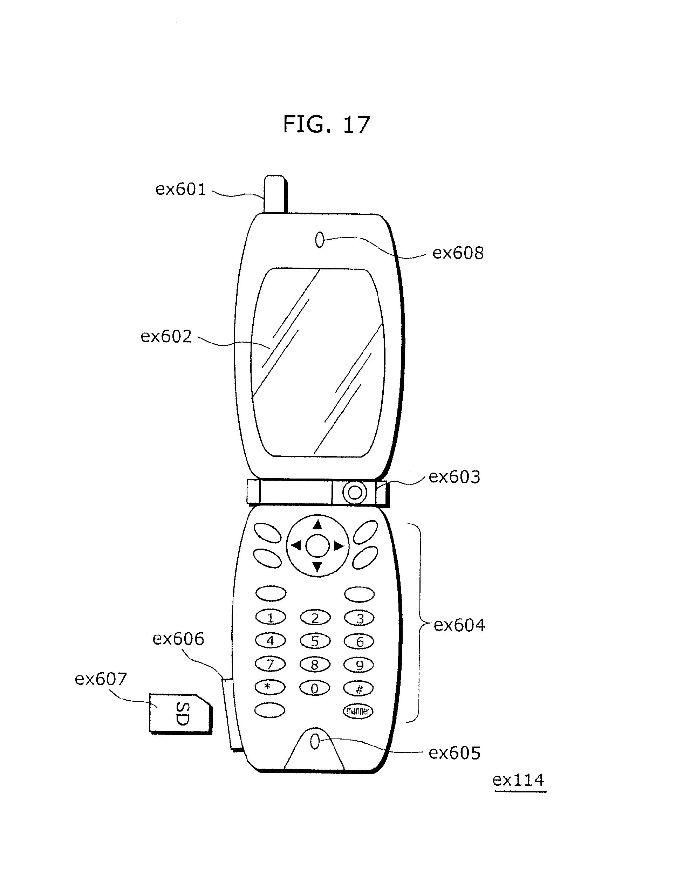

FIG. 17 illustrates an external view of a cellular phone.

[Fig. 18]

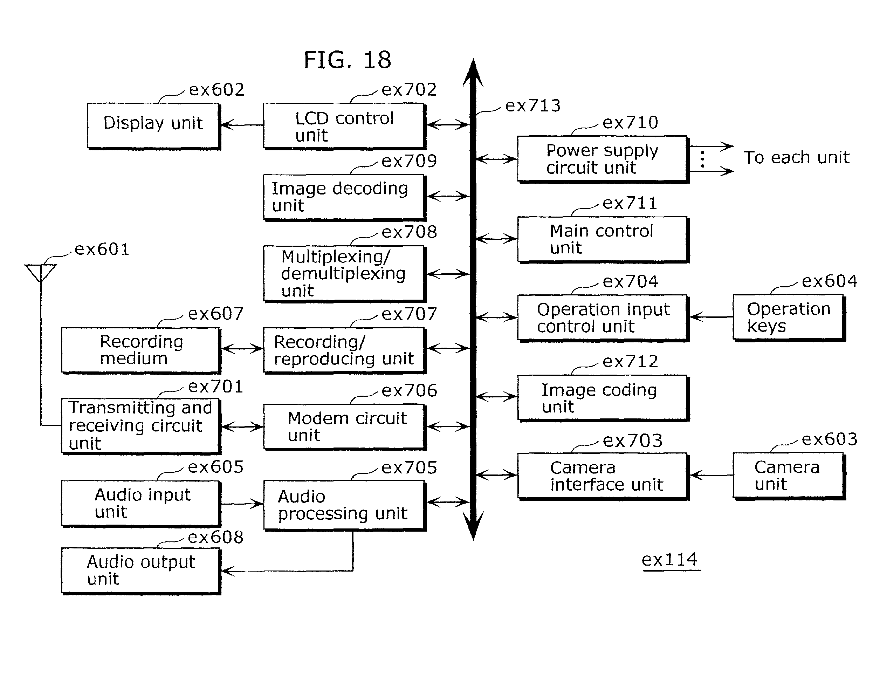

FIG. 18 is a block diagram showing an example of a configuration of the cellular phone.

[Fig. 19]

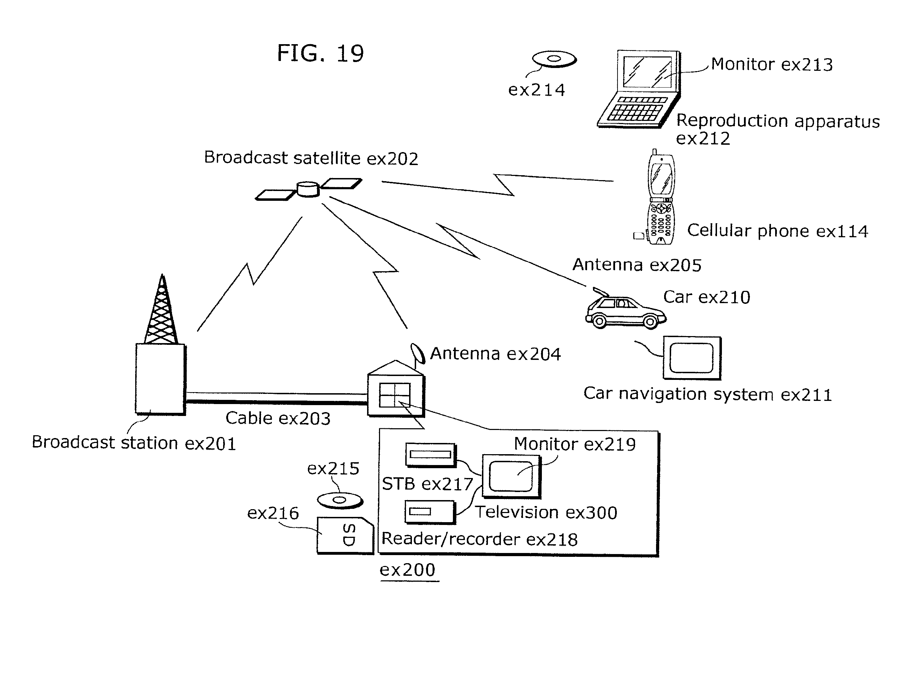

FIG. 19 schematically illustrates an example of an overall configuration of a digital broadcasting system.

[Fig. 20]

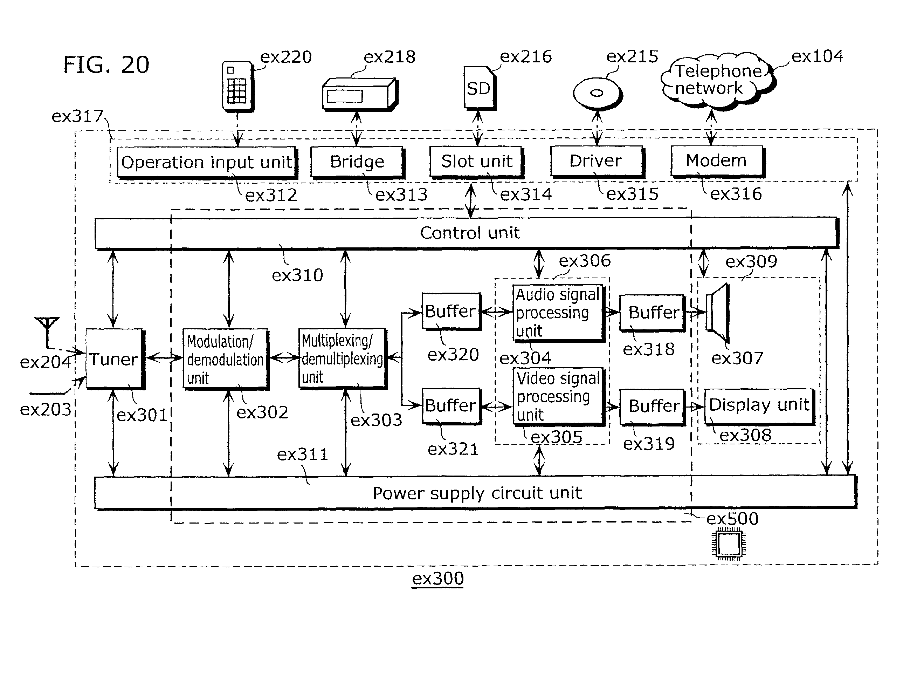

FIG. 20 is a block diagram showing an example of a configuration of a television.

[Fig. 21]

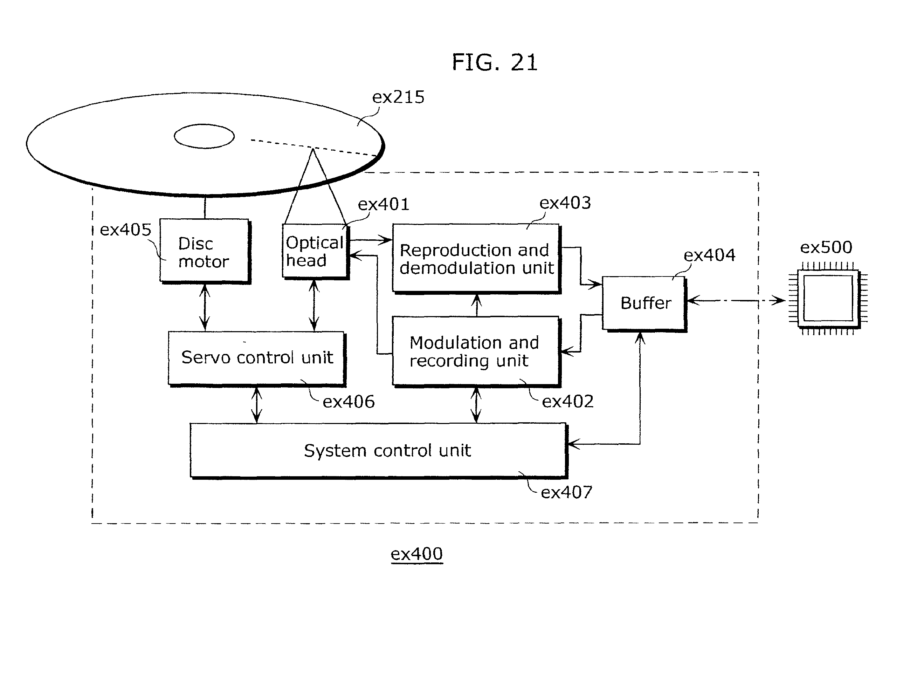

FIG. 21 is a block diagram showing an example of a configuration of an information reproducing and recording unit that reads and writes information from and on a recording medium that is an optical disc.

[Fig. 22]

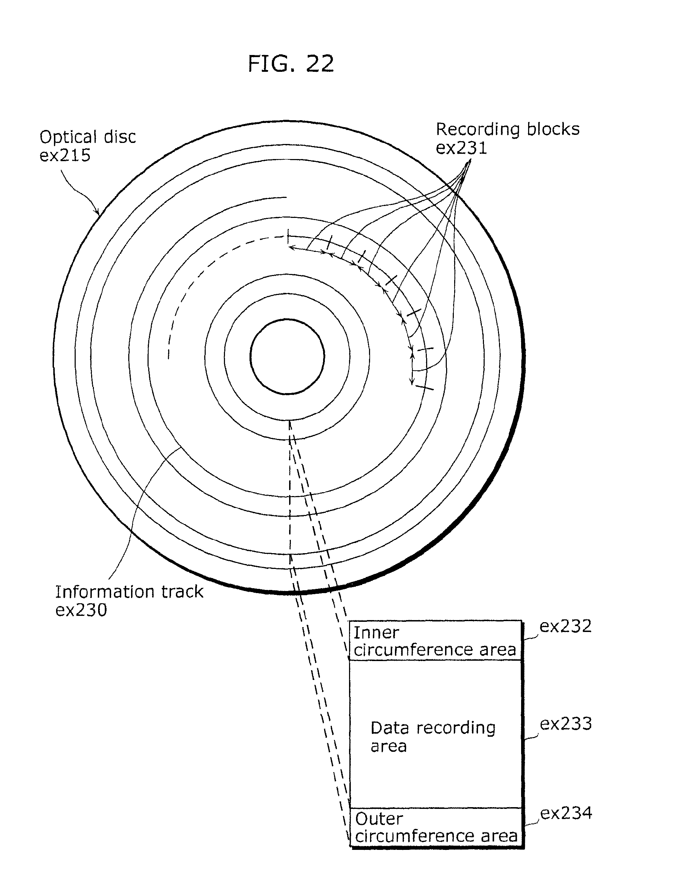

FIG. 22 illustrates an example of a configuration of a recording medium that is an optical disc.

[Fig. 23]

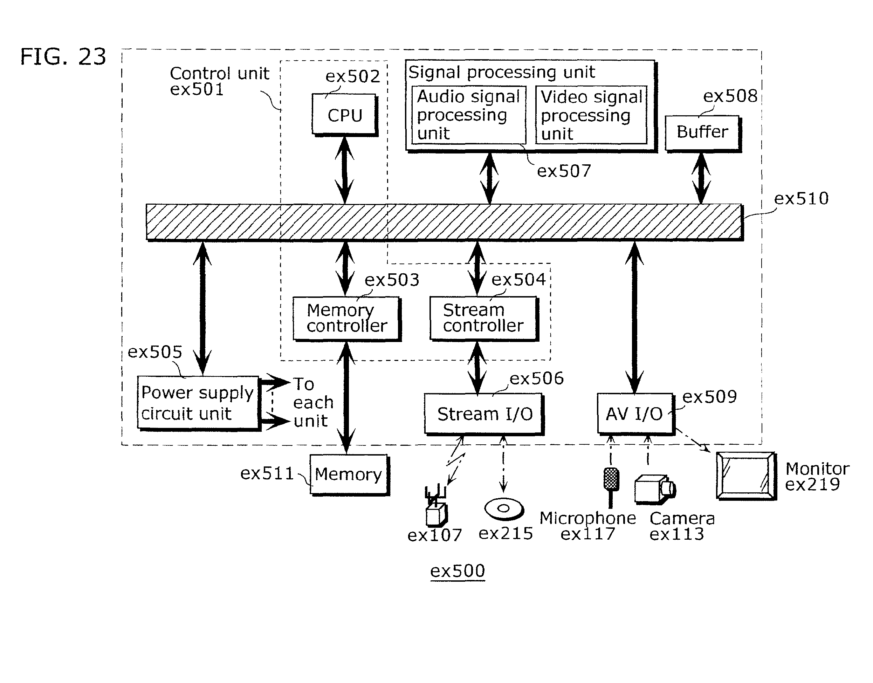

FIG. 23 is a block diagram showing an example of a configuration of an integrated circuit for implementing the image coding method and the image decoding method according to each of the embodiments.

[Description of Embodiments]

(First embodiment)

The problem underlying the present invention is based on the observation that employing the same scan for transformation coefficients of the image blocks with different content characteristics, such as direction and/or sharpness of edges, may lead to varying efficiency of the encoding applied afterwards. This is caused by the non-stationary statistics of the transformation coefficients of different blocks within an image or an image sequence (video).

In order to solve this problem, the present invention provides a method for encoding, a method for decoding, an apparatus for encoding (encoder) and an apparatus for decoding (decoder) of image data divided into blocks of pixels. Accordingly, the scanning of the transformation coefficients in a current block is performed sequentially according to the scan order which has been determined based on the values of coefficients of the current block.

In hybrid image and video coding, an image is typically divided into blocks. These blocks may have a predefined fixed size or may vary. For transformation, usually square shaped blocks of 16, 8, or 4 pixels are employed. However, in general, the blocks do not necessarily have to be square shaped and their size may also be arbitrary. The above mentioned sizes have been selected as a tradeoff between the complexity and performance of the video encoding techniques.

The overall image coding apparatus may be referred to as an encoder, and only a unit which performs a coding process in the image coding apparatus may be referred to as an encoder. Likewise, the overall decoding apparatus may be referred to as a decoder, and only a unit which performs a decoding process in the image decoding apparatus may be referred to as a decoder.

The embodiment described as the first embodiment includes a plurality of embodiments which include like components or steps.

FIG. 4 is a block diagram that illustrates an image coding apparatus 401 and an image decoding apparatus 402 in accordance with the present invention. A block of image pixels 409 enters the encoder. Here, the term pixel may be related, for instance, to an image to be encoded, or a prediction error image to be encoded if prediction has been applied in one of the previous encoding stages. Pixel values enter a transformation unit 410. The pixel values correspond, for instance, directly to the image intensity values of a gray scale image, or to values of one of the color components of an arbitrary color space such as red, green and blue color components of the RGB color space or the luminance and two chrominance components of the YUV color space. Transformation unit 410 is capable of transforming the input current block of pixel 409 into a block of transformation coefficients 411. The values of transformation coefficients 411 are then input to a determination unit 440, capable of determining a scan order for the current image block which is being encoded. The determination unit 440 does not necessarily receive at the input all transform coefficients, a subset of them may be sufficient to determine the scan order based thereon. However, the values of all transform coefficients may also be used to determine the scan order. The result of determination is then fed into a scanning unit 420, which is capable of scanning the transformation coefficients 411 (still organized in a block) sequentially and according with the scan order determined by the determination unit 440. Here, all the transformation coefficients may be scanned or a subset of them. The scanned transform coefficients 421 are ordered serially according to the scan order in order to enter an encoder 430. The encoder 430 performs further encoding of the input sequence of coefficients, preferably a lossless encoding.

Image data 431 encoded in this manner is then provided, for instance, for storage and/or for transmission in a medium 450. The medium 450 may be any kind of storage such as memory, flash, hard disc, portable magnetic or optical disc, etc. The medium 450 may also be any transmission channel formed by the resources of a fixed or wireless system such as xDSL, LAN, WLAN, WiMAX, UMTS, Internet or any other proprietary or standardized system, or a combination of such systems. The encoded image data 451 is then obtained by the image decoding apparatus 402 from the medium 450, e.g. retrieved from a storage or received from a channel. The encoded image data is preferably the same as the encoded image data 431 provided to the medium. However, if the medium 450 is an error-prone medium, it may also provide erroneous or incomplete image data 451.

A decoder 470 of the image decoding apparatus 402 is capable of parsing/decoding the encoded scanned transformation coefficient data from the obtained image data 451. The sequence of parsed/decoded scanned transformation coefficients 471 or a subset thereof is then delivered to a determination unit 460 which is capable of determining an inverse scan order to be applied to the sequence of decoded scanned transformation coefficients 471. The determination unit 460 determines the inverse scan order based on the values of the decoded transformation coefficients 471 or their subset. The results of the determination and the decoded transformation coefficients 471 are input to a block forming unit 480. The block forming unit 480 applies the determined inverse scan order to the decoded sequence of the transformation coefficients 471 in order to obtain a block of transformation coefficients 481. The block of transformation coefficients 481 enters a transformation unit 490, which is capable of transforming such block of coefficients into pixel 499 of the current image block being decoded.

In order to work properly, the encoder and decoder are matched, i.e. the determination unit 440 of the encoder works in similar way as the determination unit 460 of the decoder and the result of determination is the same, if the input transformation coefficients 411 and 471 are the same.

It should be noted that the present invention may readily be applied to an encoder and/or a decoder based on H.264/MPEG-4 AVC standard, e.g. the image coding apparatus 100 and/or the image decoding apparatus 200 as illustrated in FIGS. 1 and 2, respectively. In such an embodiment, the transformation unit 410 of the image coding apparatus 401 corresponds to the transformation and quantization unit 110, wherein a block of prediction error image (output of the subtractor 105) is transformed and quantized. Transform coefficients 411 in this embodiment correspond to transformed and quantized pixel values of the current image block. The determination unit 440, the scanning unit 420 and the encoder 430 may be parts of the entropy encoding 190. Today's H.264/MPEG-4 AVC employs the scan order 350b of the zig-zag scan described with reference to FIG. 3B. Other types of a zig-zag like scan are used, for instance, for video sequences in interlaced mode. Instead of the fixed zig-zag scan, switching of scans in accordance with the present invention may thus be performed. Similarly, the decoder 470, together with the block forming unit 480 and the determination unit 460 may form parts of the entropy decoding unit 290. The inverse quantization and inverse transformation unit 220 corresponds then to the transformation unit 490.

Preferably, the scan order is determined by selecting from a plurality of predefined scan orders. According to an embodiment of the present invention, one of scan orders to be selected is, the widely used zig-zag scan; another one is a so called frequency selective scan employed together with frequency selective coding (FSC).

Frequency selective update and coding have been described in PTL 2: European Patent Application (EP) 1 720 356 and PTL 3: EP 1 768 416, which are incorporated herein by reference. Frequency selective coding is based on the observation that human eye is less sensitive to high frequencies than to lower frequencies and that modifying and even omitting higher frequencies may often remain unnoticed by the human eye. Thus, frequency selective coding only scans and encodes/decodes certain frequency parts of the input signal, while assuming other frequency parts to be zero. In this way, the compression gain can be increased, especially in combination with frequency selective scan which adapts on the pattern of frequency selective encoded coefficients.

The main idea of such frequency selective video techniques is to update frequency segments on a frame by frame basis. A predefined amount of low frequency coefficients is always updated. These should be the coefficients that are essential for human perception, i.e. the changing of these causes distortions easily detectable by the human eye. For each frame, a low frequency part of each block and one or several segments containing high frequencies are updated.

The high frequency segments are updated alternatively for each frame in order to have a complete update of the frequencies after a given number of frames.

FIG. 5 illustrates such frequency selective encoding within a part of a modified block diagram of a hybrid video encoder, which may be, again, the H.264/MPEG-4 AVC encoder as described with reference to FIG. 1. The prediction error signal is transformed and quantized by a transform/quantization unit 510 and enters a frequency selective encoder 550. Standard encoding would encode the entire block 501 as illustrated by the shading covering all (quantized) transformation coefficients. In the frequency selective encoder 550, the transformed and quantized block 501 of coefficients is divided into segments, of which only a subset is entropy coded and transmitted within the bit stream (updated). The block 502 as illustrated contains a segment of lower frequencies LF and a segment 8 corresponding to a single transformation coefficient, these segments being marked by shading in the Figure to distinguish them from the remaining part of the block which contains the coefficients that are not transmitted, or are considered to be zero. By alternating the updated shaded segments frame by frame, the frequencies of a block are updated continuously and the bit rate of each frame is considerably reduced. The coefficients that are not updated are implicitly assumed to be zero. In an entropy coding unit 590, the quantized transform coefficients within the block are scanned applying a predetermined scan. This scan starts with the lowest frequency coefficients and scans all the coefficients of the block up to the highest frequency coefficient. When transmitting the prediction error information, the coefficients are transmitted until the last non-zero coefficient is reached. The remaining coefficients are known to be zeros. A disadvantage of a zig-zag scan order 605 applied to a frequency selective encoding is that a lot of zero coefficients may be scanned before the last non-zero coefficient is reached, as can be seen in FIG. 6.

In the scan order 605 shown in FIG. 6, non-updated coefficients that are always zero are scanned, but such non-updated coefficients may not be scanned. Alternatively, such non-updated coefficients may be scanned last. Such a change in the scan order results in a higher effect of coding. FIG. 7 illustrates such a change in the scan order.

For blocks using frequency selective encoding, certain scanned zero coefficients always have the same location inside each block for the whole picture. In such a case, the scan can be changed to scan only the updated frequencies, or the coefficients are re-ordered to scan the update frequencies at the beginning, as illustrated in FIG. 7. A block 701 contains updated coefficients numbered from 1 to 20 and marked by shading in the figure. The remaining coefficients are assumed to be zero in accordance with the frequency selective coding scheme. Scanning of the twenty updated coefficients following their increasing numbers would be an option if frequency selective coding were applied to each block. However, in accordance with the present invention, the scan order may be determined based on coefficient values and in this example, either a zig-zag scan or another - the frequency selective scan is used. In order to apply the zig-zag scan basically in the same way, the frequency selective scan may consist in reordering the updated coefficients. A block 702 with reordered coefficients may be scanned by the zig-zag scan wherein the regular zero-coefficients are scanned as last, resulting in a long run of zeros. The determination of the positions of the updated coefficients and the zero coefficients in frequency selective coding may be performed using the quantization matrix as described in PTL 3: EP 1 768 416 in details.

However, updating the same frequency segments for all blocks of one frame is not optimal. The distortion of quality resulting from removing certain frequencies depends considerably on the content of the blocks. It is therefore important to adapt the frequency selective encoding pattern to the content of each block. For certain blocks with high frequencies, as well as for blocks where the prediction fails, it would be an advantage to transmit all the coefficients, i.e. to disable frequency selective encoding, i.e. to select another scan order such as the standard zig-zag order (without reordering the coefficients).

The present invention allows controlling of the use of frequency selective encoding for each block. In order to perform this control in an efficient way, the encoder has to inform the decoder about the enabling and disabling of the frequency selective encoding using possibly a low additional rate. In accordance with the present invention, the decision about enabling or disabling the frequency selective encoding is performed in an equal way at the encoder and at the decoder, based on the available information. Accordingly, no explicit signaling is necessary for the frequency selective encoding control. The information available to the encoder and the decoder can be, for instance, the values of the prediction error. If the prediction error is important, i.e. if the prediction fails, the frequency selective encoding should not be used for such blocks.

According to an embodiment of the present invention, the transform coefficients of each block are used to decide at the encoder side as well as at the decoder side about the enabling and disabling of the frequency selective scan. In order to facilitate this, the coefficient values used for the decision are scanned in the same order independently of the employment of a frequency selective scan or an ordinary scan. Otherwise the decoder would not be capable of making the same determination of the scan order as the encoder.

FIG. 8 illustrates the benefits that can be achieved by the deployment of frequency selective encoding together with frequency selective scan for blocks with different contents having different distribution of coefficients in the frequency domain. Using of the frequency selective encoding technique may provide a higher coding efficiency than the current H.264/MPEG-4 AVC standard at a similar subjective quality for most regions in the majority of video sequences. However, the erasing of high frequencies around sharp edges produces visible artifacts. In order to reach exactly the same subjective quality as the standard for such areas, frequency selective encoding should be adapted locally. Around edges or in the areas where the prediction fails, frequency selective encoding should not be applied.

According to frequency selective encoding, in order to maximize the coding efficiency, the scanning order of the coefficients is changed depending on the quantization process used for that block. If the block uses frequency selective encoding, a frequency selective scan is used and the coefficients are re-ordered in such a manner that the updated coefficients are scanned at the beginning. As can be seen from FIG. 8, the order of scanning essentially influences the form of the resulting serial stream of scanned coefficients. In accordance with this embodiment of the present invention, a block 810 that does not use frequency selective encoding, but rather a standard quantization and scanning process, is scanned in the order defined by the zig-zag scan resulting in serial stream 811. In order to determine each coefficient value at the decoder, this scan must be known. For a frequency selective encoded block 820, a frequency selective scan is used resulting in a serial stream of coefficients 821. In order to match the encoding and the decoding process, the decoder needs to know whether an ordinary scan, such as a zig-zag scan, or a frequency selective scan has been used. In both frequency selective scan and zig-zag scan, the low frequency coefficients are scanned first. These coefficients are essential for human perception and thus they are always updated by the frequency selective encoding and always transmitted at the beginning, even if a frequency selective scan is applied.

FIG. 9 shows the first ten coefficients (shaded parts) scanned by an ordinary zig-zag scan 912 applied to a non frequency selective encoded block 910 and the first ten coefficients scanned by a frequency selective scan 922 applied to a frequency selective encoded block 920. Even if the order of scan 912 for a zig-zag scan differs from that of frequency selective scan 922, the order of the first ten coefficients remains the same. The remaining coefficients (dotted parts) scanned after the first ten coefficients by a zig-zag scan are different from the remaining coefficients scanned by a frequency selective scan.

The experiments confirmed that the first coefficients, for the ordinary scan and for the frequency selective scan, are enough to facilitate a decision about enabling or disabling of the frequency selective encoding and scan for each block. As these coefficients are always transmitted at the beginning, independently from the scan, they can be read at the decoder side without knowing the scan.

FIG. 10 schematically illustrates the encoding method in accordance with this embodiment of the present invention. A 4x4 block 1000 comprises sixteen frequency coefficients numbered c1 to c16. In general, the present invention is not limited to the particular size of a block such as 8x8 or 4x4 and may be applied to an arbitrarily sized block. However, in present encoding algorithms, such as H.264/MPEG-4 AVC, blocks of 8x8 and 4x4 form the basis for the transformation. The sum S of the absolute values of the first three coefficients c1, c2 and c3 is calculated

$$S = |c1| + |c2| + |c3|.$$

The sum of absolute values S is then compared to a threshold. Preferably, the threshold is predefined. It can be fixed, or can be a part of the encoder and decoder settings or even dynamically adjustable. It is an advantage if the threshold is specified differently for various block sizes, especially in the case where the number of coefficients used for the decisions about enabling and disabling of frequency selective scan differs for different block sizes. If the sum of absolute values S is greater than or equal to the threshold, the prediction error for this block contains too many frequencies. In such a case, the frequency selective encoding (abbreviated in the Figure by FSU - frequency selective update) is disabled and the coefficients are scanned according to an ordinary scan such as a zig-zag scan 1010. If the sum of absolute values S is smaller than the threshold, frequency selective encoding is enabled and the coefficients are scanned according to the frequency selective scan 1020.

In general, the sum of absolute values S may be calculated over an arbitrary number of coefficients common to the ordinary scan and to the frequency selective scan. It does not necessarily need to be the maximum of common coefficients. The sum S of absolute values may also be replaced by any other measure such as sum of square coefficient values, the measure may be further normalized by the number of coefficients considered, the values of coefficients may be further weighted. However, it may be any other measure based on, for example, an arbitrary function of coefficient values or the number of those common coefficients having certain value. Such measure, together with the value of the threshold are to perform a decision about enabling or disabling the frequency selective encoding for the current block and to choose the appropriate scan. The step of frequency selective encoding includes re-ordering of the coefficients in accordance with the quantization matrix and applying the scan 1030 to the re-ordered coefficients. The serialized stream of coefficients 1021 or 1011 is then entropy encoded and the resulting bit stream is stored or transmitted.

In other words, the sequence of transform coefficients resulting from the frequency selective scan 1020 may be transmitted, or alternatively, the sequence of transform coefficients resulting from the scan 1030 with the scan order substantially changed by re-ordering may be transmitted. In decoding, like in coding but using the inverse scan order, it is possible to generate the two-dimensional array of transform coefficients from the one-dimensional array of transform coefficients.

The corresponding decoding method is schematically illustrated in FIG. 11. First, the received levels of the coefficients 1101 common to both scans are read resulting in schematic block 1100 with unknown order of the remaining coefficients. The first three coefficients can be decoded because these coefficients are scanned in the same order in both scans. In the example in FIG. 11, the first three coefficients x1, 0, and x2 of the encoded 4x4 block are read. The sum S of absolute values of these three coefficients is computed as follows:

$$S = |x1| + |0| + |x2|$$

The computed sum S is then compared to the threshold in the same way as at the encoder. Depending on the result of this comparison, the remaining coefficients are inverse scanned according to the corresponding scan which is either a zig-zag scan or the frequency selective scan. A block 1110 is then formed by the inverse scan which corresponds to the frequency selective scan. Alternatively, a block 1120 is formed by the inverse scan which corresponds to the zig-zag scan. After being inverse scanned, the block 1110 or 1120 is inverse transformed to obtain the pixel values of the block being decoded.

In accordance with another embodiment of the present invention, the scan order is determined based on the number of non-zero coefficients or on the number of zero-coefficients. This parameter is also available at both encoder and decoder. The number of non-zero coefficients corresponds to the number of pairs run-level, if run-length encoding is applied as described in the background section. For instance, in the H.264/MPEG-4 AVC CAVLC coding, the scan order may be correspondingly determined based on number of levels (unsigned quantized coefficient values) and/or number of trailing ones. The number of zero coefficients may be similarly derived based on total number of zeros between the non-zero coefficients and/or based on the number of zeros within the entire block. In general, statistic measures based on the number of coefficients having certain value, may be used, since they also do not require knowledge of the scan order to be determined.

In accordance with still another embodiment of the present invention, the scan order is determined based on a measure calculated using the levels if run-length encoding is applied to the scanned transformation coefficients. The values of non-zero coefficients (levels) may provide a more precise indication for the choice of the scan order. Again, such measure can be calculated equally by the encoder and the decoder without knowing the scan order applied.

The encoder and the decoder in the previous examples determined the scan order by selecting it from a set of predefined scan orders. However, the scan order may be determined also adaptively, i.e., not only from a group of predefined and/or fixed scans. For instance, the values of the first $N$ coefficients may be used to define the scan order, together with their position within the block. A simple example may be to distinguish if the first $N$ coefficients at different positions are zero or not and based on such a binary pattern to select one of the possible $2^N$ scan orders. Here, the $2^N$ scan orders may be predefined. For instance, each of $2^N$ binary sequence may have a scan order assigned. The assignment may be obtained, for instance by optimizing using a selected training set of blocks. Another possibility is to use for training the already coded blocks of the same image or sequence of images. This allows obtaining of the same dynamic assignment at the encoder and at the decoder.

Herein, ^ is a symbol representing exponentiation, and $2^N$ represents 2 to the power of $N$.

The values used to determine the scan order do not necessarily have to be limited to a binary symbol (zero/non-zero), the scan order may arbitrarily be determined based on the transformation coefficient values and their position. In addition, the information from already coded block may be employed to determine the scan order. Such information from the previous blocks may be the values of the coefficients of such blocks, the scan chosen for such previous blocks, or any other information related to such blocks.

The degree of adaptation may be further increased and the scan may be determined adaptively within a particular block. Accordingly, the scan order for an $(i+1)$st coefficient is determined based on the values of $i$ previously scanned coefficients (or their subset), $i$ being an integer equal to or greater than 1.

In accordance with another embodiment of the present invention, the first $N$ coefficients are scanned with a predetermined fixed scan and it is determined if the value of each of the coefficients is a zero value or a non-zero value. An $N$ bit long binary word is then formed, the positions within the binary word corresponding to the positions of the scanned coefficients, the binary word having zero at the positions corresponding to zero coefficients and having one at the positions with non-zero coefficients. The binary word is then used to determine the position of the next $(N+1)$st coefficient to be scanned.

The assignment between the value of the binary word and the position of the next coefficient to be scanned has to be known to both, encoder and decoder. Such assignment is preferably based on values of coefficients in previously encoded blocks and thus, also dynamically adaptable to the character of the image and/or video sequence. In this way, a scan optimized for the image characteristics and adapted to the current block may be selected and the resulting coding efficiency increased. Moreover, no additional information needs to be signalized. Alternatively, the assignment may be fixed, known to both the encoder and the decoder, or it may be signalized.

Once, the scan for the ($N$+$1$)st coefficient is determined, the position of the ($N$+$2$)nd coefficient to be scanned may be determined also based on the value of this coefficient alone or in combination with the values of previous coefficients. For example, the above mentioned $N$ bit long binary word may be extended to an $N$+$1$ bit long binary word by determining if the value of ($N$+$1$)st coefficient is a zero value or a non-zero value. The $N$+$1$ bit long binary word may then be used to determine the position of the next coefficient to be scanned. In this way, namely by extending the binary word based on the value of the newly scanned coefficient, the scan for the entire block or macroblock may be determined.

The decision about the position of the next coefficient to be scanned does not necessarily need to be determined based on the binary value corresponding to the information if the coefficients already scanned are zero or non-zero. It may be an advantage to consider for instance the values of the coefficients, the absolute values of the coefficients, the square values of the coefficients, or any other function of the coefficients which provides more information than a simple binary number. Accordingly, the scan position of the next coefficient to be scanned may be determined based on the values of previously scanned coefficients or based on the value of the single coefficient that has been scanned as the last one.

These examples only illustrate some examples of various embodiments of the present invention. Other systems for determining the scan order based on the values of transform coefficients may obviously be used as well. Adapting the scan within the current block enables better flexibility of scanning and thus, even blocks containing edges and thus having non-zero coefficient values not only in the upper left corner, may be scanned compactly and further encoded efficiently by an entropy code.

FIG. 12A and FIG. 12B summarize the steps of a method according to the present invention applied at the encoder and the decoder in the execution order, respectively. At the encoder, an image pixel block is first transformed in step S1201 into the transform coefficients. All or some of the transform coefficients are then used to determine a scan order in step S1202. The scan order, determined in the step S1202 is then applied to scan the transform coefficients in step S1203. The scanned (serialized) sequence of the transform coefficients is then encoded in step S1204.

At the decoder, the encoded syntax elements carrying transform coefficient values are decoded in step S1214 and used to determine a scan order in step S1212. The scan order determined in the step S1212 is used in the step S1213 for inverse scanning of the transformation coefficients, which results in forming of a block of transformation coefficients. The block of transform coefficients obtained in the step S1213 is finally inversely transformed in step S1211 to obtain the pixel values of the current block.

Frequency selective encoding as well as switching between the frequency selective encoding and an ordinary encoding may be enabled or disabled within the encoder setting as an optional feature. It may be beneficial to enable or disable the frequency selective encoding with a finer granularity, for instance, on a per slice basis, or even per smaller image areas such as macroblocks or blocks. The use of frequency selective encoding and the possibility of disabling it locally in accordance with the present invention may be signaled, for instance, in the slice header. Such a slice header may contain two flags:

(1) The first (enabling) flag is equal to zero if frequency selective encoding is not used at all in the slice and equal to one if frequency selective encoding is used.

(2) The second flag is present only if the previous flag is equal to one. It is equal to zero if frequency selective encoding is used for all the blocks of the slice, and it is equal to one if frequency selective encoding is disabled for certain blocks.

When the second flag is equal to one, the number of low frequency coefficients used to determine the scan may be provided. However, the number of the low frequency coefficients may also be predefined dependent on the size of the block or preset for the entire sequence. Furthermore, the thresholds used at the encoder side may be provided if the second flag is set. This gives the encoder the liberty to control how often frequency selective encoding should be used within the slice.

The explicit signaling is therefore shifted at slice level instead of the block level. It may even be signalized once per sequence or within a network abstraction layer unit in an arbitrary position within the video sequence. The signaling of the scan at block level is performed implicitly, for instance, through the first $N$ coefficients. The coding efficiency of the frequency selective encoding is thus preserved, while enabling local adaptation in order to reach the same subjective quality as in the H.264/AVC encoding algorithm.

Each of the determination unit 440 of the image coding apparatus 401 and the determination unit 460 of the image decoding unit 402 shown in FIG. 4 may include an enabling unit that enables or disables determining of the scan order or inverse scan order depending on the transform coefficients. In the scan order determining step (S1202) shown in FIG. 12A and in the inverse scan order determining step (S1212) shown in FIG. 12B, the determination of the scan order or inverse scan order depending on the transform coefficients may be enabled or disabled.

The above description is concentrated on the possible switching between the zig-zag scan and the frequency selective scan using the first transmitted coefficients. However, this was an example only and the present invention can be applied to switching between the frequency selective scan and any other scan. As long as the order of the first low frequency coefficients of the frequency selective scan and the other scans is maintained, the present invention as described above may be used to switch the scans. Moreover, the order of the first scanned coefficients does not even need to be really known. In general, it is possible to calculate a measure such as sum of absolute values also for any $N$ coefficients arbitrarily ordered, but located within the same area of the current block, not necessarily at the beginning. For instance, the zig-zag scan may start with a DC coefficient and continue with the coefficient below (cf. FIG. 3A) while the frequency selective scan may start with the DC coefficient and continue with the coefficient on the right (cf. FIG. 7). In both scans, the same coefficients are scanned, even if their order differs. Such calculating of a measure based on values of non-zero transformation coefficients regardless their position within a known location is only possible if all coefficients are quantized in the same way in order to enable unambiguous and position independent inverse quantization. As soon as the quantization parameters for such coefficients differ, for instance, if a quantization matrix is used, it is not possible to recover the true coefficient values without knowing their position.

FIG. 13 illustrates a variation of the scan order to be determined.

In a block 1301, first, the transform coefficients are scanned in a predetermined scan order 1302. That is, a transform coefficient 1303 at the upper left position is scanned, and a transform coefficient 1304 below the transform coefficient 1303 is then scanned. Subsequently, a transform coefficient 1305 at the upper right position of the transform coefficient 1304 is scanned.

At this point, when the second transform coefficient 1304 is larger than the third transform coefficient 1305, the scanning may continue in a scan order 1307 that gives priority to vertical scanning. On the other hand, when the second transform coefficient 1304 and the third transform coefficient 1305 are not much different from each other, the scanning may continue in a scan order 1306 of ordinary zig-zag scanning.

Such determination of the scan order is effective when field coding that has a tendency to have larger values in the vertical direction rather than in the horizontal direction and frame coding that has no such tendency are taken into consideration. To the field coding, the scan order 1307 that gives priority to vertical scanning is applied, while, to the frame coding, the scan order 1306 of ordinary zig-zag scanning is applied. The coding efficiency improves by determining the scan order based on characteristics of the respective transform coefficients in the filed coding and in the frame coding.

While the determination of the scan order in coding is described above as an example, the same holds true for the inverse scan order in decoding.

In addition, the scanning may be switched based on switching between the field coding scheme and the frame coding scheme though the switching accuracy of scanning improves more by switching the scanning based on the characteristics of the transform coefficients.

FIG. 14 illustrates another variation of the scan order to be determined.

The sum S of the absolute values of the first scanned transform coefficients x1, x2, and x3 is calculated. When the calculated sum S is larger than a threshold, the transform coefficients are scanned in the scan order 1307 that gives priority to vertical scanning. When the sum S is not larger than the threshold, the transform coefficients are scanned in the scan order 1308 of ordinary zig-zag scanning.

Such determination is based on the fact that the transform coefficients in the field coding for moving images tend to have relatively large values than the transform coefficients in the frame coding for still images. Thus, the determination of the scan order based on such characteristics improves the coding efficiency.

The scan order 1307 for the field coding and the scan order 1308 of zig-zag scanning are different in the scan order of the first three transform coefficients required to determine the scan order. Even when the scan order of the transform coefficients required to determine the scan order is different as above, it may be such that the transform coefficients required to determine the scan order is loaded into a buffer or the like, and after the scan order is determined, the loaded transform coefficients are reordered. Alternatively, the scanning may be performed again using the determined scan order. This means that the transform coefficients required to determine the scan order do not need to be fixed.

While the determination of the scan order in coding is described above as an example, the same holds true for the inverse scan order in decoding.

FIG. 15 is a conceptual diagram showing a current block and neighboring blocks.

Relative to a current block to be encoded 1505, there are a neighboring block 1501 at the upper left position, a neighboring block 1502 at the upper position, a neighboring block 1503 at the upper right position, and a neighboring block 1504 at the left position. The upper left neighboring block 1501, the upper neighboring block 1502, the upper right neighboring block 1503, and the left neighboring block 1504 have been encoded.

In this case, the scan order for the transform coefficients of the current block 1505 may be determined based on the transform coefficients of the encoded neighboring blocks and a transform coefficient 1506 scanned in the current block 1505. This allows the transform coefficients which have not been scanned in the current block 1505 to be scanned in the determined scan order.

For example, when there are many non-zero high frequency coefficients in the neighboring blocks, it is highly possible that there are many non-zero high frequency coefficients also in the current block to be encoded. The determination of the scan order based on such characteristics improves the coding efficiency.

While the determination of the scan order in coding is described above as an example, the same holds true for the inverse scan order in decoding. That is, the inverse scan order for the transform coefficients of the current block to be decoded may be determined based on the transform coefficients of the decoded neighboring blocks and the inverse-scanned transform coefficients.

The examples presented previously focus on switching between two scans, but this technique can, however, be applied to switch between more than two scans. For instance, if two different frequency selective segmentation patterns are used within the same slice with two different corresponding frequency selective scans, the present invention can be applied to switch between three scans or even more. An additional threshold may be necessary. For instance, the number of transform coefficients to be scanned according to the frequency selective scan may increase as the value of each of the transform coefficients to be evaluated increases.

The present invention is also applicable for determining of the scan rather than selecting from a small predefined set of scans. The scans to be switched between may also be adapted to another type of entropy encoding than run-length coding. If quantization is applied, the determination of the scan order is to be performed based on the quantized coefficients since they are known at the encoder as well as at the decoder. However, the quantization does not necessarily have to be applied.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, erasable programmable read only memory (EPROM), electrically erasable and programmable read only memory (EEPROM), flash memory, registers, hard disks, CD-ROM, DVD, etc.

Most of the examples have been outlined in relation to an H.264/MPEG-4 AVC based video coding system, and the terminology mainly relates to the H.264/MPEG-4 AVC terminology. However, this terminology and the description of the various embodiments with respect to H.264/MPEG-4 AVC based coding is not intended to limit the principles and ideas of the invention to such systems. Also the detailed explanations of the encoding and decoding in compliance with the H.264/MPEG-4 AVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore the concept of the invention may be also readily used in the enhancements of H.264/MPEG-4 AVC coding currently discussed by the JVT.

Summarizing, the present invention relates to improving the performance of video encoding in terms of coding efficiency while maintaining the same image quality. Accordingly, a current block of image to be encoded is transformed into a block of transformation coefficients. The values of some of the transformation coefficients are used to determine the scan to be used when serializing the two-dimensional block of coefficients into a sequence of coefficients. In accordance with the determined scan order, the coefficients are scanned and input to further encoding. Similarly, the decoder utilizes the values of transformation coefficients to determine the order of the inverse scanning to be applied in order to form a block of coefficients out of a sequence of received syntax elements after their decoding.

(Second embodiment)

The processing described in the above embodiment can be simply implemented by an independent computer system, by recording, in a recording medium, a program for implementing the configurations for the image coding method and the image decoding method described in the above embodiment. The recording medium may be any recording medium as long as the program can be recorded, such as a magnetic disc, an optical disc, a magnetic optical disc, an IC card, and a semiconductor memory.

Hereinafter, the applications to the image coding method and the image decoding method described in the above embodiment and systems using thereof will be described.

FIG. 16 illustrates an overall configuration of a content providing system ex100 for implementing content distribution services. The area for providing communication services is divided into cells of desired size, and base stations ex106 to ex110 which are fixed wireless stations are placed in each of the cells.

The content providing system ex100 is connected to devices, such as a computer ex111, a personal digital assistant (PDA) ex112, a camera ex113, a cellular phone ex114 and a game machine ex115, via an Internet ex101, an Internet service provider ex102, a telephone network ex104, as well as the base stations ex106 to ex110.

However, the configuration of the content providing system ex100 is not limited to the configuration shown in FIG. 16, and a combination in which any of the elements are connected is acceptable. In addition, each of the devices may be directly connected to the telephone network ex104, rather than via the base stations ex106 to ex110 which are the fixed wireless stations. Furthermore, the devices may be interconnected to each other via a short distance wireless communication and others.

The camera ex113, such as a digital video camera, is capable of capturing moving images. A camera ex116, such as a digital video camera, is capable of capturing both still images and moving images. Furthermore, the cellular phone ex114 may be the one that meets any of the standards such as Global System for Mobile Communications (GSM), Code Division Multiple Access (CDMA), Wideband-Code Division Multiple Access (W-CDMA), Long Term Evolution (LTE), and High Speed Packet Access (HSPA). Alternatively, the cellular phone vex114 may be a Personal Handyphone System (PHS).

In the content providing system ex100, a streaming server ex103 is connected to the camera vex113 and others via the telephone network ex104 and the base station ex109, which enables distribution of a live show and others. For such a distribution, a content (for example, video of a music live show) captured by the user using the camera ex113 is coded as described in the above embodiment, and the coded content is transmitted to the streaming server ex103. On the other hand, the streaming server ex103 carries out stream distribution of the received content data to the clients upon their requests. The clients include the computer ex111, the PDA vex112, the camera ex113, the cellular phone ex114, and the game machine ex115 that are capable of decoding the above-mentioned coded data. Each of the devices that have received the distributed data decodes and reproduces the coded data.

The captured data may be coded by the camera ex113 or the streaming server ex103 that transmits the data, or the coding processes may be shared between the camera ex113 and the streaming server ex103. Similarly, the distributed data may be decoded by the clients or the streaming server ex103, or the decoding processes may be shared between the clients and the streaming server ex103. Furthermore, the data of the still images and moving images captured by not only the camera ex113 but also the camera vex116 may be transmitted to the streaming server ex103 through the computer ex111. The coding processes may be performed by the camera ex116, the computer ex111, or the streaming server ex103, or shared among them.

Furthermore, the coding and decoding processes may be performed by an LSI ex500 generally included in each of the computer ex111 and the devices. The LSI ex500 may be configured of a single chip or a plurality of chips. Software for coding and decoding images may be integrated into some type of a recording medium (such as a CD-ROM, a flexible disc, a hard disk) that is readable by the computer ex111 and others, and the coding and decoding processes may be performed using the software. Furthermore, when the cellular phone vex114 is equipped with a camera, the moving image data obtained by the camera may be transmitted. The video data is data coded by the LSI ex500 included in the cellular phone ex114.

Furthermore, the streaming server ex103 may be composed of servers and computers, and may decentralize data and process the decentralized data, record, or distribute data.

As described above, the clients can receive and reproduce the coded data in the content providing system ex100. In other words, the clients can receive and decode information transmitted by the user, and reproduce the decoded data in real time in the content providing system ex100, so that the user who does not have any particular right and equipment can implement personal broadcasting.

When each of the devices included in the content providing system ex100 performs coding and decoding, the image coding method and the image decoding method shown in the above embodiment may be used.

The cellular phone ex114 will be described as an example of such a device.

FIG. 17 illustrates the cellular phone ex114 that uses the image coding method and the image decoding method described in the above embodiment. The cellular phone ex114 includes: an antenna ex601 for transmitting and receiving radio waves through the base station ex110; a camera unit ex603 such as a CCD camera capable of capturing moving and still images; a display unit ex602 such as a liquid crystal display for displaying the data such as decoded video captured by the camera unit ex603 or received by the antenna ex601; a main body unit including a set of operation keys ex604; an audio output unit ex608 such as a speaker for output of audio; an audio input unit ex605 such as a microphone for input of audio; a recording medium ex607 for recording coded or decoded data including data of captured moving or still images, data of received e-mails, and data of moving or still images; and a slot unit ex606 for enabling the cellular phone ex114 to attach the recording medium ex607. The recording medium ex607 is a medium that stores a flash memory device within a plastic case, for example, an SD Card. The flash memory device is one type of Electrically Erasable and Programmable Read-Only Memory (EEPROM) which is a non-volatile memory that is electrically rewritable and erasable.

Next, the cellular phone ex114 will be described with reference to FIG. 18. In the cellular phone ex114, a main control unit ex711 designed to control overall each unit of the main body including the display unit ex602 as well as the operation keys ex604 is connected mutually, via a synchronous bus ex713, to a power supply circuit unit ex710, an operation input control unit ex704, an image coding unit ex712, a camera interface unit ex703, a liquid crystal display (LCD) control unit ex702, an image decoding unit ex709, a multiplexing/demultiplexing unit ex708, a recording/reproducing unit ex707, a modem circuit unit ex706, and an audio processing unit ex705.

When a call-end key or a power key is turned ON by a user's operation, the power supply circuit unit ex710 supplies the respective units with power from a battery pack so as to activate the cell phone ex114 that is digital and is equipped with the camera.

In the cellular phone ex114, the audio processing unit ex705 converts the audio signals collected by the audio input unit ex605 in voice conversation mode into digital audio data under the control of the main control unit ex711 including a CPU, ROM, and RAM. Then, the modem circuit unit ex706 performs spread spectrum processing on the digital audio data, and the transmitting and receiving circuit unit ex701 performs digital-to-analog conversion and frequency conversion on the data, so as to transmit the resulting data via the antenna ex601. In addition, in the cellular phone ex114, the transmitting and receiving circuit unit ex701 amplifies the data received by the antenna ex601 in voice conversation mode and performs frequency conversion and the analog-to-digital conversion on the data. Then, the modem circuit unit ex706 performs inverse spread spectrum processing on the data, and the audio processing unit ex705 converts it into analog audio data, so as to output it via the audio output unit ex608.

Furthermore, when an e-mail in data communication mode is transmitted, text data of the e-mail inputted by operating the operation keys ex604 of the main body is sent out to the main control unit ex711 via the operation input control unit ex704. The main control unit ex711 causes the modem circuit unit ex706 to perform spread spectrum processing on the text data, and the transmitting and receiving circuit unit ex701 performs the digital-to-analog conversion and the frequency conversion on the resulting data to transmit the data to the base station ex110 via the antenna ex601.

When image data is transmitted in data communication mode, the image data captured by the camera unit ex603 is supplied to the image coding unit ex712 via the camera interface unit ex703. When the image data is not transmitted, the image data captured by the camera unit ex603 can be displayed directly on the display unit ex602 via the camera interface unit ex703 and the LCD control unit ex702.

The image coding unit ex712 including the image coding apparatus as described in the present invention compresses and codes the image data supplied from the camera unit ex603 using the coding method employed by the image coding apparatus as shown in the above embodiment so as to transform the data into coded image data, and sends the data out to the multiplexing/demultiplexing unit ex708. Furthermore, the cellular phone ex114 simultaneously sends out, as digital audio data, the audio received by the audio input unit ex605 during the capturing with the camera unit ex603 to the multiplexing/demultiplexing unit ex708 via the audio processing unit ex705.

The multiplexing/demultiplexing unit ex708 multiplexes the coded image data supplied from the image coding unit ex712 and the audio data supplied from the audio processing unit ex705, using a predetermined method. Then, the modem circuit unit ex706 performs spread spectrum processing on the multiplexed data obtained by the multiplexing/demultiplexing unit ex708. After the digital-to-analog conversion and frequency conversion on the data, the transmitting and receiving circuit unit ex701 transmits the resulting data via the antenna ex601.

When receiving data of a video file which is linked to a Web page and others in data communication mode, the modem circuit unit ex706 performs inverse spread spectrum processing on the data received from the base station ex110 via the antenna ex601, and sends out the multiplexed data obtained as a result of the inverse spread spectrum processing to the multiplexing/demultiplexing unit ex708.

In order to decode the multiplexed data received via the antenna ex601, the multiplexing/demultiplexing unit ex708 demultiplexes the multiplexed data into a bitstream of image data and that of audio data, and supplies the coded image data to the image decoding unit ex709 and the audio data to the audio processing unit ex705, respectively via the synchronous bus ex713.

Next, the image decoding unit ex709 including the image decoding apparatus as described in the present invention decodes the bitstream of the image data using the decoding method corresponding to the coding method as shown in the above embodiment so as to generate reproduced video data, and supplies this data to the display unit ex602 via the LCD control unit ex702. Thus, the video data included in the video file linked to the Web page, for instance, is displayed. Simultaneously, the audio processing unit ex705 converts the audio data into analog audio data, and supplies the data to the audio output unit ex608. Thus, the audio data included in the video file linked to the Web page, for instance, is reproduced.

The present invention is not limited to the above-mentioned system because terrestrial or satellite digital broadcasting has been in the news lately, and at least either the image coding apparatus or the image decoding apparatus described in the above embodiment can be incorporated into a digital broadcasting system as shown in FIG. 19. More specifically, a broadcast station ex201 communicates or transmits, via radio waves to a broadcast satellite ex202, audio data, video data, or a bitstream obtained by multiplexing the audio data and the video data. Upon receipt of the bitstream, the broadcast satellite ex202 transmits radio waves for broadcasting. Then, a home-use antenna ex204 with a satellite broadcast reception function receives the radio waves, and a device, such as a television (receiver) ex300 and a set top box (STB) ex217 decodes a coded bitstream and reproduces the decoded bitstream. Furthermore, a reader/recorder ex218 that reads and decodes such a bitstream obtained by multiplexing image data and audio data that are recorded on recording media ex215 and 216, such as a CD and a DVD may include the image decoding apparatus as shown in the above embodiment. In this case, the reproduced video signals are displayed on a monitor ex219. It is also possible to implement the image decoding apparatus in the set top box ex217 connected to a cable ex203 for a cable television or an antenna ex204 for satellite and/or terrestrial broadcasting, so as to reproduce the video signals on the monitor ex219 of the television ex300. The image decoding apparatus may be included not in the set top box but in the television ex300. Also, a car ex210 having an antenna ex205 can receive signals from the satellite ex202 or the base station ex201 for reproducing video on a display device such as a car navigation system ex211 set in the car ex210.

Furthermore, the image decoding apparatus or the image coding apparatus as shown in the above embodiment can be implemented in the reader/recorder ex218 (i) for reading and decoding the video data, the audio data, or the coded bitstream obtained by multiplexing the video data and the audio data, or (ii) for coding the video data, the audio data, or the coded bitstream obtained by multiplexing the video data and the audio data and recording the resulting data as the multiplexed data on the recording medium ex215. Here, the video data and the audio data are recorded on the recording medium ex215, such as a BD and a DVD. In this case, the reproduced video signals are displayed on the monitor ex219. Furthermore, the reproduced video signals can be reproduced by another device or system, using the recording medium ex215 on which the coded bitstream is recorded. For example, another reproduction apparatus ex212 can reproduce the video signals on a monitor ex213, using a recording medium ex214 on which the coded bitstream is copied.

Furthermore, it is also possible to implement the image decoding apparatus in the set top box ex217 connected to the cable ex203 for a cable television or the antenna ex204 for satellite and/or terrestrial broadcasting, so as to reproduce the video signals on the monitor ex219 of the television ex300. The image decoding apparatus may be included not in the set top box but in the television ex300.

FIG. 20 illustrates the television (receiver) ex300 that uses the image coding method and the image decoding method described in the above embodiment. The television ex300 includes: a tuner ex301 that obtains or provides a bitstream of video information from and through the antenna ex204 or the cable ex203, etc. that receives a broadcast; a modulation/demodulation unit ex302 that demodulates the received coded data or modulates data into coded data to be supplied outside; and a multiplexing/demultiplexing unit ex303 that demultiplexes the modulated data into video data and audio data, or multiplexes the coded video data and audio data into data. The television ex300 further includes: a signal processing unit ex306 including an audio signal processing unit ex304 and a video signal processing unit ex305 that decode audio data and video data and code audio data and video data, respectively; a speaker ex307 that provides the decoded audio signal; and an output unit ex309 including a display unit ex308 that displays the decoded video signal, such as a display. Furthermore, the television ex300 includes an interface unit ex317 including an operation input unit ex312 that receives an input of a user operation. Furthermore, the television ex300 includes a control unit ex310 that controls overall each constituent element of the television ex300, and a power supply circuit unit ex311 that supplies power to each of the elements. Other than the operation input unit ex312, the interface unit ex317 may include: a bridge ex313 that is connected to an external device, such as the reader/recorder ex218; a slot unit ex314 for enabling attachment of the recording medium ex216, such as an SD card; a driver ex315 to be connected to an external recording medium, such as a hard disk; and a modem ex316 to be connected to a telephone network. Here, the recording medium ex216 can electrically record information using a non-volatile/volatile semiconductor memory element for storage. The constituent elements of the television ex300 are connected to each other through a synchronous bus.

First, a configuration will be described in which the television ex300 decodes data obtained from outside through the antenna ex204 and others and reproduces the decoded data. In the television ex300, upon receipt of a user operation from a remote controller ex220 and others, the multiplexing/demultiplexing unit ex303 demultiplexes the video data and audio data demodulated by the modulation/demodulation unit ex302, under control of the control unit ex310 including a CPU. Furthermore, the audio signal processing unit ex304 decodes the demultiplexed audio data, and the video signal processing unit ex305 decodes the demultiplexed video data, using the decoding method described in the above embodiment, in the television ex300. The output unit ex309 provides the decoded video signal and audio signal outside, respectively. When the output unit ex309 provides the video signal and the audio signal, the signals may be temporarily stored in buffers ex318 and ex319, and others so that the signals are reproduced in synchronization with each other. Furthermore, the television ex300 may read a coded bitstream not through a broadcast and others but from the recording media ex215 and ex216, such as a magnetic disc, an optical disc, and an SD card. Next, a configuration will be described in which the television ex300 codes an audio signal and a video signal, and transmits the data outside or writes the data on a recording medium. In the television ex300, upon receipt of a user operation from the remote controller ex220 and others, the audio signal processing unit ex304 codes an audio signal, and the video signal processing unit ex305 codes a video signal, under control of the control unit ex310 using the coding method as described in the above embodiment. The multiplexing/demultiplexing unit ex303 multiplexes the coded video signal and audio signal, and provides the resulting signal outside. When the multiplexing/demultiplexing unit ex303 multiplexes the video signal and the audio signal, the signals may be temporarily stored in buffers ex320 and ex321, and others so that the signals are reproduced in synchronization with each other. Here, the buffers ex318 to ex321 may be plural as illustrated, or at least one buffer may be shared in the television ex300. Furthermore, data may be stored in a buffer other than the buffers ex318 to ex321 so that the system overflow and underflow may be avoided between the modulation/demodulation unit ex302 and the multiplexing/demultiplexing unit ex303, for example.

Furthermore, the television ex300 may include a configuration for receiving an AV input from a microphone or a camera other than the configuration for obtaining audio and video data from a broadcast or a recording medium, and may code the obtained data. Although the television ex300 can code, multiplex, and provide outside data in the description, it may be not capable of coding, multiplexing, and providing outside data but capable of only one of receiving, decoding, and providing outside data.

Furthermore, when the reader/recorder ex218 reads or writes a coded bitstream from or in a recording medium, one of the television ex300 and the reader/recorder ex218 may decode or code the coded bitstream, and the television ex300 and the reader/recorder ex218 may share the decoding or coding.

As an example, FIG. 21 illustrates a configuration of an information reproducing/recording unit ex400 when data is read or written from or in an optical disc. The information reproducing/recording unit ex400 includes constituent elements ex401 to ex407 to be described hereinafter. The optical head ex401 irradiates a laser spot on a recording surface of the recording medium ex215 that is an optical disc to write information, and detects reflected light from the recording surface of the recording medium ex215 to read the information. The modulation recording unit ex402 electrically drives a semiconductor laser included in the optical head ex401, and modulates the laser light according to recorded data. The reproduction demodulating unit ex403 amplifies a reproduction signal obtained by electrically detecting the reflected light from the recording surface using a photo detector included in the optical head ex401, and demodulates the reproduction signal by separating a signal component recorded on the recording medium ex215 to reproduce the necessary information. The buffer ex404 temporarily holds the information to be recorded on the recording medium ex215 and the information reproduced from the recording medium ex215. A disc motor ex405 rotates the recording medium ex215. A servo control unit ex406 moves the optical head ex401 to a predetermined information track while controlling the rotation drive of the disc motor ex405 so as to follow the laser spot. The system control unit ex407 controls overall the information reproducing/recording unit ex400. The reading and writing processes can be implemented by the system control unit ex407 using various information stored in the buffer ex404 and generating and adding new information as necessary, and by the modulation recording unit ex402, the reproduction demodulating unit ex403, and the servo control unit ex406 that record and reproduce information through the optical head ex401 while being operated in a coordinated manner. The system control unit ex407 includes, for example, a microprocessor, and executes processing by causing a computer to execute a program for read and write.

Although the optical head ex401 irradiates a laser spot in the description, it may perform high-density recording using near field light.

FIG. 22 schematically illustrates the recording medium ex215 that is the optical disc. On the recording surface of the recording medium ex215, guide grooves are spirally formed, and an information track ex230 records, in advance, address information indicating an absolute position on the disc according to change in a shape of the guide grooves. The address information includes information for determining positions of recording blocks ex231 that are a unit for recording data. An apparatus that records and reproduces data reproduces the information track ex230 and reads the address information so as to determine the positions of the recording blocks. Furthermore, the recording medium ex215 includes a data recording area ex233, an inner circumference area ex232, and an outer circumference area ex234. The data recording area ex233 is an area for use in recording the user data. The inner circumference area ex232 and the outer circumference area ex234 that are inside and outside of the data recording area ex233, respectively are for specific use except for recording the user data. The information reproducing/recording unit 400 reads and writes coded audio data, coded video data, or coded data obtained by multiplexing the coded audio data and the coded video data, from and on the data recording area ex233 of the recording medium ex215.

Although an optical disc having a layer, such as a DVD and a BD is described as an example in the description, the optical disc is not limited to such, and may be an optical disc having a multilayer structure and capable of being recorded on a part other than the surface. Furthermore, the optical disc may have a structure for multidimensional recording/reproduction, such as recording of information using light of colors with different wavelengths in the same portion of the optical disc and recording information having different layers from various angles.

Furthermore, the car ex210 having the antenna ex205 can receive data from the satellite ex202 and others, and reproduce video on the display device such as the car navigation system ex211 set in the car ex210, in a digital broadcasting system ex200. Here, a configuration of the car navigation system ex211 will be a configuration, for example, including a GPS receiving unit from the configuration illustrated in FIG. 20. The same will be true for the configuration of the computer ex111, the cellular phone ex114, and others. Furthermore, similarly to the television ex300, a terminal such as the cellular phone ex114 may have 3 types of implementation configurations including not only (i) a transmitting and receiving terminal including both a coding apparatus and a decoding apparatus, but also (ii) a transmitting terminal including only a coding apparatus and (iii) a receiving terminal including only a decoding apparatus.

As such, the image coding method and the image decoding method in the above embodiment can be used in any of the devices and systems described. Thus, the advantages described in the above embodiment can be obtained.

Furthermore, the present invention is not limited to the above embodiments, and various modifications and revisions are possible without departing from the scope of the present invention.

(Third embodiment)

Each of the image coding method, the image coding apparatus, the image decoding method, and the image decoding apparatus in each of the above embodiments is typically achieved in the form of an integrated circuit or a Large Scale Integrated (LSI) circuit. As an example of the LSI, FIG. 23 illustrates a configuration of the LSI ex500 that is made into one chip. The LSI ex500 includes elements ex501 to ex509 to be described below, and the elements are connected to each other through a bus ex510. The power supply circuit unit ex505 is activated by supplying each of the elements with power when power is on.

For example, when coding is performed, the LSI ex500 receives an AV signal from a microphone ex117, a camera ex113, and others through an AV IO ex509 under control of a control unit ex501 including a CPU ex502, a memory controller ex503, and a stream controller ex504. The received AV signal is temporarily stored in a memory ex511 outside the LSI ex500, such as an SDRAM. Under control of the control unit ex501, the stored data is subdivided into data portions according to the processing amount and speed as necessary. Then, the data portions are transmitted to a signal processing unit ex507. The signal processing unit ex507 codes an audio signal and/or a video signal. Here, the coding of the video signal is the coding described in the above embodiments. Furthermore, the signal processing unit ex507 sometimes multiplexes the coded audio data and the coded video data, and a stream I/O ex506 provides the multiplexed data outside. The provided bitstream is transmitted to a base station ex107, or written on the recording medium ex215. When data sets are multiplexed, the data sets should be temporarily stored in the buffer ex508 so that the data sets are synchronized with each other.

For example, when coded data is decoded, the LSI ex500 temporarily stores, in the memory ex511, the coded data obtained from the base station ex107 through the stream I/O ex506 or read from the recording medium ex215 under control of the control unit ex501. Under control of the control unit ex501, the stored data is subdivided into data portions according to the processing amount and speed as necessary. Then, the data portions are transmitted to the signal processing unit ex507. The signal processing unit ex507 decodes audio data and/or video data. Here, the decoding of the video signal is the decoding described in the above embodiments. Furthermore, a decoded audio signal and a decoded video signal may be temporarily stored in the buffer ex508 and others so that the signals can be reproduced in synchronization with each other. Each of the output units, such as the cellular phone ex114, the game machine ex115, and the television ex300 provides the decoded output signal through, for example, the memory 511 as necessary.

Although the memory ex511 is an element outside the LSI ex500 in the description, it may be included in the LSI ex500. The buffer ex508 is not limited to one buffer, but may be composed of buffers. Furthermore, the LSI ex500 may be made into one chip or a plurality of chips.

The name used here is LSI, but it may also be called IC, system LSI, super LSI, or ultra LSI depending on the degree of integration.

Moreover, ways to achieve integration are not limited to the LSI, and a special circuit or a general purpose processor and so forth can also achieve the integration. A Field Programmable Gate Array (FPGA) that is programmable after manufacturing an LSI or a reconfigurable processor allowing re-configuration of the connection or configuration of an LSI can be used for the same purpose.

In the future, with advancement in semiconductor technology, a brand-new technology may replace LSI. The functional blocks can be integrated using such a technology. One such possibility is that the present invention is applied to biotechnology.

Although the coding method, the coding apparatus, the decoding method, and the decoding apparatus according to the present invention have been described based on the exemplary embodiments, the present invention is not limited to the embodiments. Those skilled in the art will readily appreciate that many modifications are possible in the exemplary embodiments without materially departing from the novel teachings and advantages of the present invention. Accordingly, all such modifications and other embodiments conceivable by arbitrarily combining the structural elements and/or steps of different embodiments are intended to be included within the scope of the present invention.

[Industrial Applicability]

The present invention is applicable as an image coding apparatus or an image decoding apparatus to, for example, an image recording apparatus and an image reproducing apparatus.

[Reference Signs List]

| | |
|---|---|
| 100, 401 | Image coding apparatus |
| 105 | Subtractor |
| 110, 510 | Transform/quantization unit |
| 120, 220 | Inverse quantization/inverse transform unit |
| 125, 225 | Adder |
| 130, 230 | Deblocking filter |
| 140, 240, ex511 | Memory |
| 150, 260 | Intra-frame prediction unit |
| 160, 270 | Motion compensated prediction unit |
| 170 | Motion estimation unit |
| 180, 280 | Intra/inter switching unit |
| 190, 590 | Entropy coding unit |
| 200, 402 | Image decoding apparatus |
| 290 | Entropy decoding unit |
| 300, 501, 502, 701, 702, 810, 1000, 1100, 1110, 1120, 1301 | Block |
| 301, 411, 421, 471, 481, 1303, 1304, 1305, 1506 | Transform coefficient |
| 912, 1010 | Zig-zag scan |
| 350a, 350b, 605, 1302, 1306, 1307, 1308 | Scan order |
| 409, 499 | Pixel |
| 410, 490 | Transformation unit |
| 420 | Scanning unit |
| 430 | Encoder |
| 431, 451 | Image data |
| 440, 460 | Determination unit |

| | |
|---|---|
| 450 | Medium |
| 470 | Decoder |
| 480 | Block forming unit |
| 550 | Frequency selective encoder |
| 811, 821, 1011, 1021 | Stream |
| 820, 920 | Frequency selective encoded block |
| 910 | Non frequency selective encoded block |
| 922, 1020 | Frequency selective scan |
| 1030 | Scan |
| 1101 | Level |
| 1501, 1502, 1503, 1504 | Neighboring block |
| 1505 | Block to be encoded |
| ex100 | Content providing system |
| ex101 | Internet |
| ex102 | Internet service provider |
| ex103 | Streaming server |
| ex104 | Telephone network |
| ex106, ex107, ex108, ex109, ex110 | Base station |
| ex111 | Computer |
| ex112 | PDA |
| ex113, ex116 | Camera |
| ex114 | Cellular phone equipped with camera (Cellular phone) |
| ex 115 | Game machine |
| ex117 | Microphone |
| ex200 | Digital broadcasting system |
| ex201 | Broadcast station |
| ex202 | Broadcast satellite (satellite) |
| ex203 | Cable |
| ex204, ex205, ex601 | Antenna |

| | |
|---|---|
| ex210 | Car |
| ex211 | Car navigation system |
| ex212 | Reproduction apparatus |
| ex213, ex219 | Monitor |
| ex214, ex215, ex216, ex607 | Recording medium |
| ex217 | Set top box (STB) |
| ex218 | Reader/recorder |
| ex220 | Remote controller |
| ex230 | Information track |
| ex231 | Recording blocks |
| ex232 | Inner circumference area |
| ex233 | Data recording area |
| ex234 | Outer circumference area |
| ex300 | Television |
| ex301 | Tuner |
| ex302 | Modulation/demodulation unit |
| ex303 | Multiplexing/demultiplexing unit |
| ex304 | Audio signal processing unit |
| ex305 | Video signal processing unit |
| ex306, ex507 | Signal processing unit |
| ex307 | Speaker |
| ex308, ex602 | Display unit |
| ex309 | Output unit |
| ex310, ex501 | Control unit |
| ex311, ex505, ex710 | Power supply circuit unit |
| ex312 | Operation input unit |
| ex313 | Bridge |
| ex314, ex606 | Slot unit |
| ex315 | Driver |

| ex316 | Modem |
|---|---|
| ex317 | Interface unit |
| ex318, ex319, ex320, ex321, ex404, ex508 | Buffer |
| ex400 | Information reproducing/recording unit |
| ex401 | Optical head |
| ex402 | Modulation and recording unit |
| ex403 | Reproduction and demodulation unit |
| ex405 | Disc motor |
| ex406 | Servo control unit |
| ex407 | System control unit |
| ex500 | LSI |
| ex502 | CPU |
| ex503 | Memory controller |
| ex504 | Stream controller |
| ex506 | Stream I/O |
| ex509 | AV I/O |
| ex510 | Bus |
| ex603 | Camera unit |
| ex604 | Operation keys |
| ex605 | Audio input unit |
| ex609 | Audio output unit |
| ex701 | Transmitting and receiving circuit unit |
| ex702 | LCD control unit |
| ex703 | Camera interface unit (camera I/F unit) |
| ex704 | Operation input control unit |
| ex705 | Audio processing unit |
| ex706 | Modem circuit unit |
| ex707 | Recording/reproducing unit |

| ex708 | Multiplexing/demultiplexing unit |
|---|---|
| ex709 | Image decoding unit |
| ex711 | Main control unit |
| ex712 | Image coding unit |
| ex713 | Synchronous bus |

**Claims**

1. An image coding method of coding an image on a block basis, said image coding method comprising:

   transforming a two-dimensional array of pixel values of a current block to be encoded, into a two-dimensional array of transform coefficients;
   determining, depending on the two-dimensional array of the transform coefficients, a scan order for scanning the transform coefficients of the two-dimensional array;
   scanning the transform coefficients of the two-dimensional array sequentially according to the scan order, to generate a one-dimensional array of the transform coefficients; and
   coding the transform coefficients of the one-dimensional array.

2. The image coding method according to Claim 1, wherein, in said determining, the scan order is determined depending on one or more transform coefficients to be scanned first according to a same scan order in any scan order determined in said determining.

3. The image coding method according to Claim 2, wherein, in said determining, the scan order is determined (i) depending on a sum of absolute values of one or more transform coefficients among the one or more transform coefficients to be scanned first, or (ii) by comparing, when the one or more transform coefficients to be scanned first are two or more transform coefficients, a first transform coefficient and a second transform coefficient among the two or more transform coefficients.

4. The image coding method according to Claim 1, wherein, in said determining, the scan order is determined depending on the two-dimensional array of the transform coefficients and transform coefficients of previously coded blocks.

5. The image coding method according to Claim 1, wherein, in said determining, the scan order is determined by selecting a scan order from among a plurality of predefined scan orders including a scan order of a frequency selective scan in which only a subset of the transform coefficients of the two-dimensional array is scanned.

6. The image coding method according to Claim 1, wherein, in said determining, the scan order is determined by comparing a measure determined based on the two-dimensional array of the transform coefficients with a predefined threshold.

7. The image coding method according to Claim 1, further comprising
   enabling the determining of the scan order in said determining, and transmitting, to an image decoding apparatus, a signal indicating that the determining of the scan order depending on the two-dimensional array of the transform coefficients has been enabled.

8. An image decoding method of decoding an image on a block basis, said image decoding method comprising:

   decoding coded transform coefficients of a one-dimensional array corresponding to a current block to be decoded;
   determining, depending on the decoded transform coefficients of the one-dimensional array, an inverse scan order for inversely scanning the transform coefficients of the one-dimensional array for a two-dimensional array of the transform coefficients;
   inversely scanning the transform coefficients of the one-dimensional array sequentially according to the inverse scan order, to generate the two-dimensional array of the transform coefficients; and

inversely transforming the two-dimensional array of the transform coefficients into a two-dimensional array of pixels values.

9. The image decoding method according to Claim 8,
wherein, in said determining, the inverse scan order is determined depending on one or more transform coefficients to be inversely scanned first according to a same inverse scan order in any inverse scan order determined in said determining.

10. The image decoding method according to Claim 9,
wherein, in said determining, the scan order is determined (i) depending on a sum of absolute values of one or more transform coefficients among the one or more transform coefficients to be inversely scanned first, or (ii) by comparing, when the one or more transform coefficients to be inversely scanned first are two or more transform coefficients, a first transform coefficient and a second transform coefficient among the two or more transform coefficients.

11. The image decoding method according to Claim 8,
wherein, in said determining, the inverse scan order is determined depending on the transform coefficients of the one-dimensional array and transform coefficients of previously decoded blocks.

12. The image decoding method according to Claim 8,
wherein, in said determining, the inverse scan order is determined by selecting an inverse scan order from among a plurality of predefined inverse scan orders including an inverse scan order of a frequency selective scan in which only a subset of the transform coefficients of the two-dimensional array is inversely scanned.

13. The image decoding method according to Claim 8,
wherein, in said determining, the inverse scan order is determined by comparing a measure determined based on the one-dimensional array of the transform coefficients with a predefined threshold.

14. The image decoding method according to Claim 8, further comprising
enabling the determining of the inverse scan order in said determining, the enabling being triggered by receipt of a signal which is transmitted by an image coding apparatus and indicates that determining of a scan order depending on the two-dimensional array of the transform coefficients has been enabled.

15. An image coding apparatus which codes an image on a block basis, said image coding apparatus comprising:

a transformation unit configured to transform a two-dimensional array of pixel values of a current block to be encoded, into a two-dimensional array of transform coefficients;
a scan order determining unit configured to determine, depending on the two-dimensional array of the transform coefficients, a scan order for scanning the transform coefficients of the two-dimensional array;
a scanning unit configured to scan the transform coefficients of the two-dimensional array sequentially according to the scan order, to generate a one-dimensional array of the transform coefficients; and
an encoder which codes the transform coefficients of the one-dimensional array.

16. An image decoding apparatus which decodes an image on a block basis, said image decoding apparatus comprising:

a decoder which decodes coded transform coefficients of a one-dimensional array corresponding to a block to be decoded;
a determining unit configured to determine, depending on the decoded transform coefficients of the one-dimensional array, an inverse scan order for inversely scanning the transform coefficients of the one-dimensional array for a two-dimensional array of the transform coefficients;
a block forming unit configured to scan the transform coefficients of the one-dimensional array sequentially according to the inverse scan order, to generate the two-dimensional array of the transform coefficients; and
a transformation unit configured to inversely transform the two-dimensional array of the transform coefficients into a two-dimensional array of pixel values.

17. An integrated circuit which codes an image on a block basis, said integrated circuit comprising:

a transformation unit configured to transform a two-dimensional array of pixel values of a current block to be encoded, into a two-dimensional array of transform coefficients;

a scan order determining unit configured to determine, depending on the two-dimensional array of the transform coefficients, a scan order for scanning the transform coefficients of the two-dimensional array;

a scanning unit configured to scan the transform coefficients of the two-dimensional array sequentially according to the scan order, to generate a one-dimensional array of the transform coefficients; and

an encoder which codes the transform coefficients of the one-dimensional array.

18. An integrated circuit which decodes an image on a block basis, said integrated circuit comprising:

a decoder which decodes coded transform coefficients of a one-dimensional array corresponding to a block to be decoded;

a determining unit configured to determine, depending on the decoded transform coefficients of the one-dimensional array, an inverse scan order for inversely scanning the transform coefficients of the one-dimensional array for a two-dimensional array of the transform coefficients;

a block forming unit configured to scan the transform coefficients of the one-dimensional array sequentially according to the inverse scan order, to generate the two-dimensional array of the transform coefficients; and

a transformation unit configured to inversely transform the two-dimensional array of the transform coefficients into a two-dimensional array of pixel values.

19. A program causing a computer to execute the image coding method according to Claim 1.

20. A program causing a computer to execute the image decoding method according to Claim 8.

## FIG. 1

# FIG. 2

EP 2 355 517 A1

FIG. 3A

FIG. 3B

EP 2 355 517 A1

FIG. 4

# FIG. 5

Standard Encoding

Frequency Selective
Update / Encoding

Input Signal → (−) Prediction Error Signal → Transform / Quantization → 550 → Entropy Coding 590 →

Prediction Signal

510

EP 2 355 517 A1

FIG. 6

FIG. 7

701

702

| Regular zero-coefficients

▧ Non-zero coefficients and non-regular zero-coefficients

## FIG. 8

non FSU block

| x | 0 | 0 | 0 |
|---|---|---|---|
| x | x | 0 | 0 |
| 0 | x | x | x |
| 0 | 0 | x | 0 |

810

811

zigzag scan : x0x0x000x00x0xx0

FSU block

| x | 0 | 0 | 0 |
|---|---|---|---|
| x | x | 0 | 0 |
| 0 | 0 | 0 | x |
| 0 | 0 | 0 | 0 |

820

821

FSC : x0xxx0...

x: non-zero coefficient
0: zero coefficient

EP 2 355 517 A1

EP 2 355 517 A1

# FIG. 9

zigzag scan

922     FSC

910

912

920

Transmitted coefficients

First coefficients of the scans

# FIG. 10

| | | | |
|---|---|---|---|
| c1 | c2 | c6 | c7 |
| c3 | c5 | c8 | c13 |
| c4 | c9 | c12 | c14 |
| c10 | c11 | c15 | c16 |

— 1000

$$S = |c1| + |c2| + |c3|$$

x: non-zero coefficients
0: zero coefficients

If S ≥ threshold: FSU not used

— 1010

transmit →

1011
x0x0x000x00x0xx0

If S < threshold: FSU

| | | | |
|---|---|---|---|
| x | 0 | 0 | 0 |
| x | x | 0 | 0 |
| 0 | x | x | x |
| 0 | 0 | x | 0 |

apply
FSU →

— 1020

reorder
coefficients
FSC →

— 1030

transmit →

1021
x0xxx0...

## FIG. 11

received : x1 0 x2 x3 x4 0...

xi: non-zero coefficients
0: zero coefficients

1101

1100

$$S = |x1| + 0 + |x2|$$

S < threshold
FSU

1110

S ≥ threshold
FSU not used

1120

FIG. 12B

Decoding — S1214
Scan determination — S1212
Inverse scanning — S1213
Inverse transformation — S1211

FIG. 12A

Transformation — S1201
Scan determination — S1202
Scanning — S1203
Encoding — S1204

FIG. 13

## FIG. 14

Coefficients : x1 x2 x3 ···

$$S = |x1| + |x2| + |x3|$$

S ≤ threshold

S > threshold

1301

1308

1301

1307

EP 2 355 517 A1

FIG. 15

# FIG. 16

Streaming server ex103

LSI ex500

Camera ex116

Computer ex111

ex106

ex107

Game machine ex115

Internet ex101

Telephone network ex104

ex108

PDA ex112

Internet service provider ex102

ex109

Camera ex113

ex110

Cellular phone ex114

ex100

# FIG. 17

ex601

ex608

ex602

ex603

ex604

ex606

ex607

SD

*

manner

ex605

ex114

## FIG. 18

ex602 — Display unit

ex702 — LCD control unit

ex713

ex709 — Image decoding unit

ex601

ex708 — Multiplexing/ demultiplexing unit

ex607 — Recording medium

ex707 — Recording/ reproducing unit

ex701 — Transmitting and receiving circuit unit

ex706 — Modem circuit unit

ex605 — Audio input unit

ex705 — Audio processing unit

ex608 — Audio output unit

ex710 — Power supply circuit unit

To each unit

ex711 — Main control unit

ex704 — Operation input control unit

ex604 — Operation keys

ex712 — Image coding unit

ex703 — Camera interface unit

ex603 — Camera unit

ex114

EP 2 355 517 A1

# FIG. 19

ex214

Monitor ex213

Reproduction apparatus
ex212

Broadcast satellite ex202

Cellular phone ex114

Antenna ex205

Car ex210

Antenna ex204

Car navigation system ex211

Cable ex203

Broadcast station ex201

ex215

ex216

SD

Monitor ex219

STB ex217

Television ex300

Reader/recorder ex218

ex200

FIG. 20

ex220    ex218    ex216    ex215    ex104

ex317

| Operation input unit | Bridge | Slot unit | Driver | Modem |

ex312    ex313    ex314    ex315    ex316

Control unit

ex310                                ex306            ex309

Buffer ↔ Audio signal processing unit ↔ Buffer

ex204    Tuner ↔ Modulation/ demodulation unit ↔ Multiplexing/ demultiplexing unit

ex320    ex304    ex318    ex307

ex203    ex301    ex302    ex303    Buffer ↔ Video signal processing unit ↔ Buffer ↔ Display unit

ex321    ex305    ex319    ex308

ex311

Power supply circuit unit

ex500

ex300

FIG. 21

ex215

Disc motor ex405

Optical head ex401

Reproduction and demodulation unit ex403

Buffer ex404

ex500

Servo control unit ex406

Modulation and recording unit ex402

System control unit ex407

ex400

EP 2 355 517 A1

# FIG. 22

Optical disc
ex215

Recording blocks
ex231

Information track
ex230

| Inner circumference area | ex232 |
| Data recording area | ex233 |
| Outer circumference area | ex234 |

FIG. 23

EP 2 355 517 A1

<table>
<tr><td colspan="2" align="center"><strong>INTERNATIONAL SEARCH REPORT</strong></td><td>International application No.<br>PCT/JP2009/005544</td></tr>
</table>

**A. CLASSIFICATION OF SUBJECT MATTER**
*H04N7/32*(2006.01)i

According to International Patent Classification (IPC) or to both national classification and IPC

**B. FIELDS SEARCHED**

Minimum documentation searched (classification system followed by classification symbols)
H04N7/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 9-74563 A (Matsushita Electric Industrial Co., Ltd.),<br>18 March 1997 (18.03.1997),<br>paragraphs [0052], [0057]<br>(Family: none) | 1-4,7-11, 14-20<br>5-6,12-13 |
| X<br>A | JP 9-326936 A (Matsushita Electric Industrial Co., Ltd.),<br>16 December 1997 (16.12.1997),<br>paragraphs [0020] to [0021]<br>(Family: none) | 1,5-8,12-20<br>2-4,9-11 |
| A | JP 2005-229188 A (Matsushita Electric Industrial Co., Ltd.),<br>25 August 2005 (25.08.2005),<br>paragraph [0076]<br>& US 2005/0175104 A1 & CN 1655622 A | 7,14 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 January, 2010 (15.01.10) | Date of mailing of the international search report<br>26 January, 2010 (26.01.10) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/005544

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2007/063472 A2  (Koninklijke Philips Electronics N.V.),<br>07 June 2007 (07.06.2007),<br>page 5, lines 9 to 23<br>& JP 2009-517950 A        & US 2009/0046941 A1<br>& EP 1958453 A            & CN 101317462 A | 1-20 |

Form PCT/ISA/210 (continuation of second sheet) (April 2007)

**INTERNATIONAL SEARCH REPORT**

International application No.

PCT/JP2009/005544

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

The technical feature of the inventions of claims 1, 8, 15-20 cannot be a special technical feature within the meaning of PCT Rule 13.2, second sentence since Document JP 9-74563 A (Matsushita Electric Industrial Co., Ltd.), 18 March 1997 (18.03.1997), paragraphs [0052], [0057] discloses an encoding device which generates a scan pattern according to a low-band coefficient.

(Continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

| INTERNATIONAL SEARCH REPORT | International application No. |
|---|---|
| | PCT/JP2009/005544 |

Continuation of Box No.III of continuation of first sheet(2)

There exists no other common feature which can be considered as a special technical feature between the inventions of claims 1-3, 8-10, 15-20 and the inventions of claims 4-7, 11-14.

Here, the inventions of claims 4, 11 having no novelty when compared to the aforementioned Document and the inventions of claims 7, 14 which are equivalent to the inventions of claims 1, 8 added by a known technique and exhibiting no novel effect are classified into a main group of inventions. However, there is no technical relationship between the inventions of claims 1-4, 7-11, 14-20 and the inventions of claims 5-6, 12-13 involving one or more of the same or corresponding special technical features.

Accordingly, the inventions of claims 1-4, 7-11, 14-20 and the inventions of claims 5-6, 12-13 do not satisfy the requirement of unity of invention.

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1679903 A
- EP 1720356 A
- EP 1768416 A